(19) Europäisches Patentamt
European Patent Office
Office européen des brevets

(11) **EP 4 401 264 A1**

(12) **EUROPÄISCHE PATENTANMELDUNG**

(43) Veröffentlichungstag:
**17.07.2024   Patentblatt 2024/29**

(21) Anmeldenummer: **23151165.0**

(22) Anmeldetag: **11.01.2023**

(51) Internationale Patentklassifikation (IPC):
*H02J 3/28* (2006.01)        *H02J 3/38* (2006.01)

(52) Gemeinsame Patentklassifikation (CPC):
**H02J 3/28; H02J 3/381**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Primetals Technologies Germany
GmbH
91058 Erlangen (DE)**

(72) Erfinder:
• **Becker, Gerd
  91080 Marloffstein (DE)**
• **Weinzierl, Klaus
  90480 Nürnberg (DE)**
• **Winter, Günther
  91077 Neunkirchen/Brand (DE)**

(74) Vertreter: **Metals@Linz
Primetals Technologies Austria GmbH
Intellectual Property Upstream IP UP
Turmstraße 44
4031 Linz (AT)**

(54) **KOSTENEFFIZIENTER BETRIEB EINER ANLAGE DER STAHLINDUSTRIE UND WEITERER TEILSYSTEME EINES GESAMTSYSTEMS**

(57)     Ein Gesamtsystem umfasst als Teilsysteme eine Anlage (1) der Stahlindustrie, eine Elektrolyseanlage (4), einen elektrischen Energiespeicher (6) und einen Wasserstoffspeicher (7). Die Teilsysteme (1, 4, 6, 7) sind zur Übertragung elektrischer Energie und zum Transfer von Wasserstoff direkt oder indirekt miteinander verbunden. Einer Steuereinrichtung (8) sind aktuelle Zustände (Z1, Z4, Z6, Z7) der Teilsysteme (1, 4, 6, 7) sowie für einen Prognosehorizont (PH) zumindest ein gewünschter Produktionsplan (PP) der Anlage (1) der Stahlindustrie und mindestens ein erwarteter Preis (P) für aus dem Versorgungsnetz (2) bezogene elektrische Energie bekannt. Die Steuereinrichtung (8) setzt für den Prognosehorizont (PH) Betriebsweisen (B1, B4, B6, B7) für die Teilsysteme (1, 4, 6, 7) an und ermittelt für das Ende des Prognosehorizonts (PH) erwartete finale Zustände (Z1', Z4', Z6', Z7') der Teilsysteme (1, 4, 6, 7). Die Steuereinrichtung (8) ermittelt den jeweiligen erwarteten finalen Zustand (Z1', Z4', Z6', Z7') unter Verwertung des jeweiligen aktuellen Zustands (Z1, Z4, Z6, Z7) und der jeweiligen Betriebsweise (B1, B4, B6, B7). Die Steuereinrichtung (8) variiert für den Prognosehorizont (PH) die angesetzten Betriebsweisen (B1, B4, B6, B7) und hierauf aufbauend die erwarteten finalen Zustände (Z1', Z4', Z6', Z7'), so dass eine Kostenfunktion (K) minimiert wird. In die Kostenfunktion (K) gehen die Kosten für den Bezug elektrischer Energie aus dem Versorgungsnetz (2), die Betriebsweisen (B1, B4, B6, B7) der Teilsysteme (1, 4, 6, 7), Bewertungen der erwarteten finalen Zustände (Z1', Z4', Z6', Z7') und/oder eine Produktivität der Anlage (1) der Stahlindustrie ein. Die Steuereinrichtung (8) betreibt zumindest für den Beginn des Prognosehorizonts (PH) die Teilsysteme (1, 4, 6, 7) gemäß der variierten Betriebsweisen (B1, B4, B6, B7).

FIG 1

EP 4 401 264 A1

**Beschreibung**

Gebiet der Technik

Die vorliegende Erfindung geht aus von einem Betriebsverfahren für ein Gesamtsystem,

- wobei das Gesamtsystem als Teilsysteme eine Anlage der Stahlindustrie, eine Elektrolyseanlage und einen elektrischen Energiespeicher umfasst,
- wobei die Anlage der Stahlindustrie, die Elektrolyseanlage und der elektrische Energiespeicher zur Übertragung elektrischer Energie direkt oder indirekt miteinander und mit einem elektrischen Versorgungsnetz verbunden sind.

Die vorliegende Erfindung geht weiterhin aus von einem Steuerprogramm für eine Steuereinrichtung für ein Gesamtsystem,

- wobei das Gesamtsystem als Teilsysteme eine Anlage der Stahlindustrie, eine Elektrolyseanlage und einen elektrischen Energiespeicher umfasst,
- wobei die Anlage der Stahlindustrie, die Elektrolyseanlage und der elektrische Energiespeicher zur Übertragung elektrischer Energie direkt oder indirekt miteinander und mit einem elektrischen Versorgungsnetz verbunden sind,
- wobei die Anlage der Stahlindustrie, die Elektrolyseanlage und der Wasserstoffspeicher zum Transfer von Wasserstoff direkt oder indirekt miteinander verbunden sind,
- wobei das Steuerprogramm Maschinencode umfasst, der von der Steuereinrichtung abarbeitbar ist,
- wobei die Abarbeitung des Maschinencodes durch die Steuereinrichtung bewirkt, dass die Steuereinrichtung das Gesamtsystem gemäß einem derartigen Betriebsverfahren steuert.

Die vorliegende Erfindung geht weiterhin aus von einer Steuereinrichtung für ein Gesamtsystem,

- wobei das Gesamtsystem als Teilsysteme eine Anlage der Stahlindustrie, eine Elektrolyseanlage und einen elektrischen Energiespeicher umfasst,
- wobei die Anlage der Stahlindustrie, die Elektrolyseanlage und der elektrische Energiespeicher zur Übertragung elektrischer Energie direkt oder indirekt miteinander und mit einem elektrischen Versorgungsnetz verbunden sind,
- wobei die Anlage der Stahlindustrie, die Elektrolyseanlage und der Wasserstoffspeicher zum Transfer von Wasserstoff direkt oder indirekt miteinander verbunden sind,
- wobei die Steuereinrichtung mit einem derartigen Steuerprogramm programmiert ist, so dass die Steuereinrichtung bei Abarbeitung des Maschinencodes des Steuerprogramms das Gesamtsystem gemäß einem derartigen Betriebsverfahren steuert.

Die vorliegende Erfindung geht weiterhin aus von einem Gesamtsystem,

- wobei das Gesamtsystem als Teilsysteme eine Anlage der Stahlindustrie, eine Elektrolyseanlage und einen elektrischen Energiespeicher umfasst,
- wobei die Anlage der Stahlindustrie, die Elektrolyseanlage und der elektrische Energiespeicher zur Übertragung elektrischer Energie direkt oder indirekt miteinander und mit einem elektrischen Versorgungsnetz verbunden sind,
- wobei die Anlage der Stahlindustrie, die Elektrolyseanlage und der Wasserstoffspeicher zum Transfer von Wasserstoff direkt oder indirekt miteinander verbunden sind,
- wobei das Gesamtsystem eine derartige Steuereinrichtung umfasst, die bei Abarbeitung des Maschinencodes eines derartigen Steuerprogramms das Gesamtsystem gemäß einem derartigen Betriebsverfahren steuert.

Stand der Technik

Die genannten Gegenstände sind beispielsweise aus dem Aufsatz "Grüne Energieversorgung der Stahlindustrie", Stahl und Eisen, August 2022, Seiten 22 bis 24 bekannt.
Aus der KR 2019 0136300 A ist ein industrieller Prozess bekannt, dem ein Energiespeicher zugeordnet ist. Der industrielle Prozess kann ein mehr oder minder komplexer technischer Prozess sein, der mehrere aufeinander aufbauende und miteinander zusammenwirkende Teilprozesse umfasst. Der industrielle Prozess weist verschiedene Arten von Lasten auf, nämlich Lasten, die stets mit Energie versorgt werden müssen, Lasten, die abgeschaltet werden können, und Lasten, bei denen der Energieverbrauch einstellbar ist. Es wird der tatsächliche Energieverbrauch der verschiedenen Komponenten der industriellen Anlage bestimmt. Der Betrieb der industriellen Anlage und des Energiespeichers werden derart aufeinander abgestimmt, dass sich minimale Kosten ergeben.

Aus der US 10 354 297 B2 ist eine Anordnung mit einem häuslichen Verbraucher, einem Energieerzeuger und einem Energiespeicher bekannt. Der Betrieb des Energiespeichers kann unter Berücksichtigung eines geplanten Energieverbrauchs des Verbrauchers ermittelt werden. Weiterhin können auch Wetterdaten mit verwertet werden. Auch können Preisinformationen für das Beziehen elektrische Energie aus einem Versorgungsnetz und für das Einspeisen elektrischer Energie in das Versorgungsnetz berücksichtigt werden.

Aus der TW 201 235 124 A ist bekannt, dass der Energieverbrauch einer Anlage der Stahlindustrie - konkret ist eine Walzstraße genannt - bei bekannter Betriebsweise der Anlage der Stahlindustrie mit guter Genauigkeit vorhergesagt werden kann.

Aus der US 8 288 888 B2 ist eine Elektrolyseanlage bekannt, die mit einem Windpark gekoppelt ist. Zusätzlich können weitere Lasten und weitere Energiequellen vorhanden sein. Die weiteren Lasten und Energiequellen können auch die Form von elektrischen Energiespeichern aufweisen. Der mittels der Elektrolyseanlage erzeugte Wasserstoff kann an ein angegliedertes Chemiewerk oder eine Raffinerie weitergeleitet werden.

Zusammenfassung der Erfindung

In der Vergangenheit wurden bei der Ermittlung des Betriebs von Anlagen der Stahlindustrie zwar die hierbei anfallenden Kosten - auch die hierbei anfallenden Energiekosten - berücksichtigt. Die Berücksichtigung erfolgte jedoch nur in dem Sinne, dass der Gesamtbedarf an elektrischer Energie und die dadurch entstehenden Kosten für die elektrische Energie berücksichtigt wurden. Im Zuge der Hinwendung zu regenerativen Energien muss in erheblich stärkerem Ausmaß die Verfügbarkeit elektrischer Energie (einschließlich der zeitlichen Schwankungen der für die elektrische Energie anfallenden Kosten) berücksichtigt werden, da die Verfügbarkeit und damit auch die Kosten elektrischer Energie zukünftig deutlich größeren Schwankungen als in der Vergangenheit unterworfen sein wird.

Entscheidend für die effiziente Verwendung des elektrischen Energiespeichers und des Wasserstoffspeichers im Rahmen der vorliegenden Erfindung sind zum einen der - erwartete - zukünftige Strombedarf der Anlage der Stahlindustrie und zum anderen der - erwartete - zukünftige Preis für aus dem Versorgungsnetz bezogene elektrische Energie.

In dem oben genannten Fachaufsatz ist zwar ausgeführt, dass die Anlage der Stahlindustrie, die Elektrolyseanlage und der elektrische Energiespeicher mittels eines intelligenten Energiemanagementsystems gesteuert und betrieben werden. Es finden sich jedoch keine näheren Ausführungen zur Implementierung des intelligenten Energiemanagementsystems.

Die Aufgabe der vorliegenden Erfindung besteht darin, Möglichkeiten zu schaffen, mittels derer ein kosteneffizienter Betrieb eines Gesamtsystems erreicht wird, das als Teilsysteme eine Anlage der Stahlindustrie, eine Elektrolyseanlage und einen elektrischen Energiespeicher umfasst.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Zunächst umfasst das Gesamtsystem - zusätzlich zu den obenstehend genannten Teilsystemen - als (weiteres) Teilsystem einen Wasserstoffspeicher. Weiterhin sind die Anlage der Stahlindustrie, die Elektrolyseanlage und der Wasserstoffspeicher zum Transfer von Wasserstoff direkt oder indirekt miteinander verbunden. Weiterhin wird ein Betriebsverfahren der eingangs genannten Art erfindungsgemäß dadurch ausgestaltet, dass

- einer das Gesamtsystem steuernden Steuereinrichtung als aktuelle Zustände ein aktueller Anlagenzustand der Anlage der Stahlindustrie, ein aktueller Elektrolysenzustand der Elektrolyseanlage, ein aktueller Energiespeicherzustand des Energiespeichers und ein aktueller Wasserstoffspeicherzustand des Wasserstoffspeichers bekannt sind,
- der Steuereinrichtung für einen Prognosehorizont zumindest ein gewünschter Produktionsplan der Anlage der Stahlindustrie und mindestens ein erwarteter Preis für aus dem Versorgungsnetz bezogene elektrische Energie bekannt sind,
- die Steuereinrichtung für den Prognosehorizont Betriebsweisen ansetzt und für das Ende des Prognosehorizonts erwartete finale Zustände ermittelt,
- die Betriebsweisen eine Anlagenbetriebsweise für die Anlage der Stahlindustrie, eine Elektrolysenbetriebsweise für die Elektrolyseanlage, eine Energiespeicherbetriebsweise für den elektrischen Energiespeicher und eine Wasserstoffspeicherbetriebsweise für den Wasserstoffspeicher umfassen,
- die erwarteten finalen Zustände einen unter Verwertung des aktuellen Anlagenzustands und der angesetzten Anlagenbetriebsweise ermittelten finalen Anlagenzustand, einen unter Verwertung des aktuellen Elektrolysenzustands und der angesetzten Elektrolysenbetriebsweise ermittelten erwarteten finalen Elektrolysenzustand, einen unter Verwertung des aktuellen Energiespeicherzustands und der angesetzten Energiespeicherbetriebsweise ermittelten erwarteten finalen Energiespeicherzustand und einen unter Verwertung des aktuellen Wasserstoffspeicherzustands und der angesetzten Wasserstoffspeicherbetriebsweise ermittelten erwarteten finalen Wasserstoffspeicherzustand umfassen,

- die Steuereinrichtung für den Prognosehorizont die angesetzten Betriebsweisen und hierauf aufbauend die erwarteten finalen Zustände variiert, so dass eine Kostenfunktion minimiert wird,
- in die Kostenfunktion die Kosten für den Bezug elektrischer Energie aus dem Versorgungsnetz, die Betriebsweisen der Anlage der Stahlindustrie, der Elektrolyseanlage, des elektrischen Energiespeicher und des Wasserstoffspeichers, Bewertungen der erwarteten finalen Zustände und/oder eine Produktivität der Anlage der Stahlindustrie eingehen und
- die Steuereinrichtung zumindest für den Beginn des Prognosehorizonts die Teilsysteme gemäß der variierten Betriebsweise betreibt.

Die Komponenten der Anlage der Stahlindustrie nehmen Eingangsmaterialien entgegen, die sie zu ihrem Betrieb benötigen (gegebenenfalls auch Energiemedien wie beispielsweise Erdgas). Je nach Sachverhalt können die zugeführten Eingangsmaterialien Eisenerz für eine eisenerzeugende Anlage, flüssiges oder festes Eisen oder flüssiger oder fester Stahl für einen Lichtbogenofen, einen Konverter bzw. eine Pfannenanlage, Legierungselemente und Zuschlagstoffe sein. Einer Stranggießmaschine wird flüssiger Stahl zugeführt, einem Walzwerk und nachgeordneten Einrichtungen fester Stahl.

Der Anlagenzustand der Anlage der Stahlindustrie beschreibt in dem erforderlichen Ausmaß den Zustand der Anlage der Stahlindustrie. Der Anlagenzustand kann beispielsweise umfassen, welche Materialien sich in welchem Zustand momentan in der Anlage der Stahlindustrie befinden und in welchem Zustand sich Aggregate der Anlage der Stahlindustrie befinden.

Bei einem Lichtbogenofen kann die Formulierung "welche Materialien sich in welchem Zustand momentan in der Anlage der Stahlindustrie befinden" beispielsweise die Menge an in einem Ofengefäß des Lichtbogenofens befindlichem Metall, dessen chemische Zusammensetzung, dessen Temperatur und Phasenzusammensetzung (beispielsweise Anteil fest und Anteil geschmolzen) - alternativ die Enthalpie - und den Fortschritt bei Herstellen der Metallschmelze umfassen. Die Formulierung "in welchem Zustand sich Aggregate der Anlage der Stahlindustrie befinden" kann bei einem Lichtbogenofen beispielsweise den Verschleißzustand des Ofengefä-ßes, einen Verschleißzustand von Elektroden des Lichtbogenofens, eine prinzipiell maximal mögliche Leistung und eine momentan maximal mögliche Leistung umfassen. Die momentan maximal mögliche Leistung kann beispielsweise kleiner als die prinzipiell maximal mögliche Leistung sein, weil bestimmte Elemente der Anlage der Stahlindustrie nicht oder nur unvollständig arbeiten. Ähnliche Aussagen gelten bei einem Pfannenofen.

Bei einer Walzstraße kann die Formulierung "welche Materialien sich in welchem Zustand momentan in der Anlage der Stahlindustrie befinden" beispielsweise bedeuten, welches Material gerade gewalzt wird und welche Materialien sich momentan in einem den Walzgerüsten der Walzstraße vorgeordneten Ofen befinden, gegebenenfalls einschließlich der Reihenfolge der verschiedenen Materialien. Die Materialien können durch ihre Abmessungen, ihre chemische Zusammensetzung und ihre Temperatur und Phasenzusammensetzung (beispielsweise Anteil Ferrit und Anteil Austenit und Anteil Zementit) - alternativ die Enthalpie - charakterisiert sein. Die Formulierung "in welchem Zustand sich Aggregate der Anlage der Stahlindustrie befinden" kann bei einer Walzstraße beispielsweise den Verschleißzustand von Arbeitswalzen von Walzgerüsten der Walzstraße umfassen.

In ähnlicher Weise beschreibt der Energiespeicherzustand in dem erforderlichen Ausmaß den Zustand des elektrischen Energiespeichers. Der Energiespeicherzustand kann beispielsweise umfassen, in welchem Umfang (prozentual und/oder absolut) der Energiespeicher geladen ist und welche Temperatur Speicherzellen des Energiespeichers aufweisen. Weiterhin kann der Energiespeicherzustand auch umfassen, in welchem Verschleißzustand sich der Energiespeicher oder Teile des Energiespeichers befinden. Der Energiespeicherzustand kann weiterhin prinzipiell maximal mögliche und momentan maximal mögliche Betriebsgrößen umfassen, beispielsweise Lade- und Entladeströme.

Ein aktueller Elektrolysenzustand der Elektrolyseanlage kann beispielsweise, sofern eine entsprechende Abhängigkeit der Effizienz der Wasserstoffproduktion vom Stromeinsatz besteht, eine Temperatur der Elektrolyseanlage umfassen. Auch kann der Elektrolysenzustand andere variable Größen umfassen, beispielsweise Konzentrationen an Elektrolyten.

Ein aktueller Wasserstoffspeicherzustand beschreibt in dem erforderlichen Ausmaß den Zustand des Wasserstoffspeichers. Der Wasserstoffspeicherzustand kann insbesondere einen Füllgrad oder Füllstand umfassen, also in welchem Umfang (prozentual und/oder absolut) der Wasserstoffspeicher gefüllt ist.

Der Produktionsplan der Anlage der Stahlindustrie legt fest, welche Endprodukte mittels der Anlage der Stahlindustrie aus welchen Ausgangsmaterialien erzeugt werden sollen und welche Eigenschaften die Endprodukte aufweisen sollen. Gegebenenfalls legt der Produktionsplan auch fest, welche Zwischenprodukte erzeugt werden sollen. Darüber hinaus kann der Produktionsplan gewisse zeitliche Rahmenbedingungen festlegen, beispielsweise bis wann ein bestimmtes Produkt produziert werden soll ("um 18:00 Uhr soll das Produkt X fertig sein") oder zu welchen Zeitpunkten oder in welchen Zeitbereichen bestimmte Schritte bei der Herstellung des jeweiligen Endprodukts oder des jeweiligen Zwischenprodukts vorgenommen werden sollen und/oder in welcher Reihenfolge die einzelnen Endprodukte hergestellt werden sollen. Der Produktionsplan kann auch festlegen, welche Behandlungsschritte mittels der Anlage der Stahlindustrie an den Ausgangs- oder Zwischenprodukten vorgenommen werden sollen. Schließlich kann der Produktionsplan auch geplante Stillstände der Anlage der Stahlindustrie oder von Teilen der Anlage der Stahlindustrie festlegen. Ein geplanter Stillstand kann beispielsweise zu Wartungszwecken erforderlich sein.

Der erwartete Preis für aus dem Versorgungsnetz bezogene elektrische Energie kann für verschiedene Zeiträume auf jeweils individuell verschiedene Art und Weise festgelegt werden. An einem Spotmarkt steht der Preis oftmals nur für einen relativ begrenzten Zeitraum fest, beispielsweise nur 24 Stunden im Voraus. Hier werden bestimmte Strommengen für feste Zeiträume zu einem jeweiligen Spotmarktpreis gehandelt. Es gibt jedoch auch Verträge mit längerfristigen Bindungen, beispielsweise einen festen Preis für ein bestimmtes Leistungsniveau auf ein Jahr im Voraus. Die beiden Beispiele sind natürlich nicht die einzig möglichen.

Oftmals weicht weiterhin die Abrechnung des tatsächlichen Leistungsbezugs aus dem Versorgungsnetz von einem zuvor vereinbarten Tarif ab, sofern eine andere als die zuvor gekaufte Leistungsmenge bezogen wird. So wird beispielsweise der Strombezug vom Spotmarkt zwar stundenweise gekauft, die Abrechnung erfolgt jedoch viertelstundenweise. Wird die zuvor gekaufte Strommenge bezogen, wird auch der vereinbarte Tarif abgerechnet. Wird hingegen mehr oder weniger Strom bezogen, als zuvor am Spotmarkt gekauft wurde, hängt der tatsächliche Preis für aus dem Versorgungsnetz bezogene elektrische Energie von einer Vielzahl von Faktoren ab. In den tatsächlichen Preis geht insbesondere ein, ob und gegebenenfalls mit welchem Aufwand zusätzlich bezogene elektrische Energie vom Betreiber des Versorgungsnetzes beschafft werden musste oder ob und gegebenenfalls mit welchem Aufwand von dem Betreiber des Versorgungsnetzes gekaufte, aber nicht bezogene elektrische Energie anderweitig verwertet werden konnte. Derartige Sachverhalte bewegen sich außerhalb der Einflusssphäre des Käufers. Bezüglich derartiger Sachverhalte können daher lediglich vernünftige Schätzungen erfolgen. Eine exakte vorherige Berechnung ist hingegen nicht möglich.

Über Zeiträume hinaus, für welche der erwartete Preis für aus dem Versorgungsnetz bezogene elektrische Energie als solcher bekannt ist, können weiterhin aufgrund von Erfahrungswerten gewisse Schätzungen vorgenommen werden.

In jedem Fall besteht die Möglichkeit, dass der erwartete Preis für aus dem Versorgungsnetz bezogene elektrische Energie kein einfacher Skalar ist, sondern ein Vektor, der mehrere Grö-ßen umfasst. Weiterhin besteht stets auch die Möglichkeit, dass der Preis für aus dem Versorgungsnetz bezogene elektrische Energie nicht ein fester, exakt bestimmter Wert ist, sondern eine gewisse Preisspanne abdeckt.

All diese und gegebenenfalls auch weitere Sachverhalte können in Daten für den Preis für aus dem Versorgungsnetz bezogene elektrische Energie enthalten sein. Weiterhin ist es möglich, dass die Daten den Preis nur indirekt bestimmen. Ein Beispiel derartiger Daten ist eine Wettervorhersage, da das Ausmaß an Sonnenschein (Stromerzeugung durch Photovoltaik) und das Ausmaß an Wind (Stromerzeugung mittels Windkraftanlagen) direkten Einfluss auf die Menge an erzeugter und damit verfügbarer elektrischer Energie und folglich auf den Preis für aus dem Versorgungsnetz bezogene elektrische Energie haben.

Die Anlagenbetriebsweise für die Anlage der Stahlindustrie ist etwas anderes als der Produktionsplan. Insbesondere definiert die Anlagenbetriebsweise für jeden Zeitpunkt, wie die Anlage der Stahlindustrie betrieben (= gesteuert) wird. Die Anlagenbetriebsweise ist also in zeitlicher Hinsicht kontinuierlich ("um 17:52:43 Uhr wird die Anlage im Ansteuerungszustand A betrieben, um 17:52:44 Uhr im Ansteuerungszustand B, um 17:52:45 Uhr im Ansteuerungszustand C" usw.). Die Anlagenbetriebsweise muss natürlich derart festgelegt sein, dass die Vorgaben des Produktionsplans erfüllt werden.

Die Energiespeicherbetriebsweise für den elektrischen Energiespeicher legt fest, in welchem Ausmaß der elektrische Energiespeicher jeweils geladen und entladen werden soll. Die Energiespeicherbetriebsweise ist analog zur Anlagenbetriebsweise kontinuierlich. Eine aus dem elektrischen Energiespeicher entnommene elektrische Energie kann - natürlich nur temporär gegebenenfalls sogar so groß sein, dass sie den Energiebedarf der Anlage der Stahlindustrie und der Elektrolyseanlage übersteigt, so dass im Ergebnis elektrische Energie in das Versorgungsnetz eingespeist wird.

Die Elektrolysenbetriebsweise für die Elektrolyseanlage definiert für jeden Zeitpunkt, wie die Elektrolyseanlage betrieben (= gesteuert) wird. Die Elektrolysenbetriebsweise ist also - analog zur Anlagenbetriebsweise - in zeitlicher Hinsicht kontinuierlich. Die Elektrolysenbetriebsweise legt fest, in welchem Ausmaß von der Elektrolyseanlage Strom benötigt und mittels der Elektrolyseanlage Wasserstoff produziert wird.

Die Anlage der Stahlindustrie verbraucht Wasserstoff. Die Elektrolyseanlage produziert Wasserstoff. Wenn außer der Anlage der Stahlindustrie und der Elektrolyseanlage keine weiteren Erzeuger und Verbraucher für Wasserstoff vorhanden sind, ist die Wasserstoffspeicherbetriebsweise für den Wasserstoffspeicher eine abhängige Betriebsweise, da sie schlichtweg die Differenz zwischen dem von der Anlage der Stahlindustrie benötigten Wasserstoff und dem von der Elektrolyseanlage produzierten Wasserstoff aufnehmen oder abgeben muss. Es muss bei der Bestimmung der Anlagenbetriebsweise und der Elektrolysenbetriebsweise lediglich beachtet werden, dass der Wasserstoffspeicher nicht vollständig leer wird, nur eine begrenzte Kapazität aufweist und pro Zeiteinheit nur gewisse Mengen an Wasserstoff in den Wasserstoffspeicher eingespeichert oder aus ihm entnommen werden können.

Die erwarteten finalen Zustände für das Ende des Prognosehorizonts ermittelt die Steuereinrichtung ausgehend von den aktuellen Zuständen durch Fortschreibung entsprechend der jeweiligen Betriebsweise.

Das Variieren der angesetzten Betriebsweisen mit dem Ziel der Minimierung der Kostenfunktion ist ein typisches Optimierungsproblem. Optimierungsprobleme als solche, die Art und Weise, auf welche Optimierungsprobleme angesetzt werden, und die Art und Weise, auf welche Optimierungsprobleme gelöst werden, ist Fachleuten bekannt. Rein beispielhaft kann auf

- Fletcher, R.: Practical Methods on Optimization. 2nd ed., John Wiley Inc., Cichester, New York 1987,
- Hintermüller, M.; Stadler, G.: A semi-smooth Newton methods for linear-quadratic control problems, Zeitschrift für angewandte Mathematik und Mechanik (ZAMM) 83-4, 219 - 237, (2003) oder
- Ito, K.; Kunisch, K.: Semi-smooth Newton methods for state-constrained optimal control problems, Systems and Control Letters, 50, 221 - 228, (2003)

verwiesen werden. Aus den genannten Fundstellen ist auch bekannt, auf welche Art und Weise einzuhaltende Randbedingungen formuliert werden können, beispielsweise Leistungsgrenzen der Anlage der Stahlindustrie und/oder des elektrischen Energiespeichers. Aus den genannten Fundstellen sind auch weitere Sachverhalte bekannt, die bei der Formulierung von Optimierungsproblemen relevant sind. Ein Beispiel derartiger Sachverhalte ist die Art und Weise, auf welche Abweichungen von bevorzugten Betriebszuständen "bestraft" werden können. Ein weiteres Beispiel ist die Art und Weise, auf welche einzuhaltende Bedingungen (durch Gleichheitsnebenbedingungen) formuliert werden können. Durch einzuhaltende Bedingungen kann beispielsweise erzwungen werden, welchen Zustand Teilsysteme des Gesamtsystems am Ende des Prognosehorizonts aufweisen. Ein derartiger Zustand kann im Falle des elektrischen Energiespeichers beispielsweise dessen Ladezustand und im Falle eines Wasserstoffspeichers beispielsweise dessen gespeicherte Menge an Wasserstoff sein.

Der Begriff "Kostenfunktion" hat für den Fachmann auf dem Gebiet von Optimierungsproblemen eine fest umrissene Bedeutung. Sie kann zwar im Sinne einer wirtschaftlichen Bewertung gemeint sein. Dies ist aber nicht notwendigerweise der Fall. Vorliegend können in die Kostenfunktion verschiedene Größen eingehen.

Beispielsweise können in die Kostenfunktion die Kosten für den Bezug elektrischer Energie aus dem Versorgungsnetz eingehen. Die Kosten für den Bezug elektrischer Energie sind selbsterklärend. Es wird lediglich darauf hingewiesen, dass die Kosten im Einzelfall negativ sein können, nämlich dann, wenn aus dem elektrischen Energiespeicher elektrische Energie in das Versorgungsnetz zurückgespeist wird oder wenn der Bezugspreis für elektrische Energie beispielsweise aufgrund eines temporären Überangebots zeitweise negativ wird.

Alternativ oder zusätzlich können in die Kostenfunktion Bewertungen der erwarteten finalen Zustände eingehen. Die Bewertung des erwarteten finalen Anlagenzustands kann durch Verschleiß bedingte Kosten der Anlage der Stahlindustrie umfassen. Weiterhin kann die Bewertung des erwarteten finalen Anlagenzustands einen Anteil umfassen, der beispielsweise unter Verwertung eines energetischen Zustands oder eines Phasenzustands von in der Anlage der Stahlindustrie befindlichen Produkten ermittelt wird. Eine ähnliche Bewertung ist für die Elektrolyseanlage möglich. Bezüglich der beiden Speicher kann in die Bewertung insbesondere ein Verschleiß eingehen. Weiterhin kann die Bewertung der erwarteten finalen Zustände der Speicher einen Anteil umfassen, der unter Verwertung einer durch die jeweilige Speicherbetriebsweise bewirkten Degradation des jeweiligen Speichers ermittelt wird, also einer Verschlechterung der Leistungsfähigkeit des jeweiligen Speichers.

Alternativ oder zusätzlich kann in die Kostenfunktion eine Produktivität der Anlage der Stahlindustrie eingehen.

Vorzugsweise weist die Anlage der Stahlindustrie mindestens eine Komponente auf, die einer Gießeinrichtung, mittels derer flüssiger Stahl gegossen wird, technologisch vorgeordnet ist.

Die Gießeinrichtung kann insbesondere als Stranggießanlage ausgebildet sein. Bei der vorgeordneten Komponente kann es sich um eine Komponente handeln, die flüssigen Stahl erzeugt (beispielsweise einen Lichtbogenofen oder einen Konverter) oder ein Refining vornimmt (beispielsweise eine Pfannenanlage). Alternativ kann die vorgeordnete Komponente eine Anlage zur Eisenerzeugung sein, beispielsweise eine DRI-Anlage. In diesem Fall wird das mittels dieser Komponente erzeugte Eisen einem Lichtbogenofen zugeführt. Die Anlage der Stahlindustrie kann natürlich auch weitere Komponenten umfassen, insbesondere Komponenten zur Erzeugung oder Verarbeitung von festem Stahl. Derartige Komponenten können beispielsweise eine Stranggießmaschine, ein Walzwerk (warm und/oder kalt) und weitere Komponenten sein, beispielsweise ein Haspel oder eine Beizlinie.

In manchen Fällen weist das Gesamtsystem als weiteres Teilsystem eine Stromerzeugungseinrichtung auf, mittels derer auf regenerative Art und Weise elektrische Energie erzeugbar ist. In diesem Fall ist die Stromerzeugungseinrichtung zur Übertragung elektrischer Energie direkt oder indirekt mit der Anlage der Stahlindustrie, der Elektrolyseanlage und dem elektrischen Energiespeicher und dem elektrischen Versorgungsnetz verbunden. Die Stromerzeugungseinrichtung kann insbesondere als Windkraftanlage oder als Photovoltaikanlage ausgebildet sein. Das Betriebsverfahren ist bei vorhandener Stromerzeugungseinrichtung dadurch ausgestaltet,

- dass der Steuereinrichtung für den Prognosehorizont zusätzlich eine mittels der Stromerzeugungseinrichtung erzeugbare erwartete elektrische Energie bekannt ist und

- dass die Steuereinrichtung beim Variieren der Betriebsweisen die mittels der Stromerzeugungseinrichtung erzeugbare erwartete elektrische Energie berücksichtigt.

Dadurch ist eine noch weitergehende Optimierung des Betriebs des Gesamtsystems möglich.

Wie bereits erwähnt, ist die Wasserstoffspeicherbetriebsweise in dem Fall, dass Wasserstoff nur zwischen der Elektrolyseanlage, dem Wasserstoffspeicher und der Anlage der Stahlindustrie transferiert werden kann, eine abhängige bzw. abgeleitete Betriebsweise, die sich ganz von selbst aus dem Bedarf an Wasserstoff der Anlage der Stahlindustrie und der Erzeugung von Wasserstoff durch die Elektrolyseanlage ergibt. In manchen Fällen weist das Gesamtsystem als weiteres Teilsystem jedoch eine Koppeleinrichtung auf, die zum Transfer von Wasserstoff einerseits direkt oder indirekt mit der Anlage der Stahlindustrie und/oder der Elektrolyseanlage und/oder dem Wasserstoffspeicher verbunden ist und andererseits mit einem externen Transportnetz für Wasserstoff oder einem lösbar mit der Koppeleinrichtung verbundenen Zusatzspeicher für Wasserstoff verbunden ist. In diesem Fall berücksichtigt die Steuereinrichtung beim Variieren der Betriebsweisen den über die Koppeleinrichtung transferierten Wasserstoff. Die Wasserstoffspeicherbetriebsweise ist in derartigen Fällen eine Betriebsweise, die als unabhängige, eigenständig variierbare Größe angesetzt, variiert und so ermittelt werden kann. Als abhängige Betriebsweise ergibt sich in diesem Fall der Betrieb der Koppeleinrichtung. Alternativ könnte auch der Betrieb der Koppeleinrichtung als unabhängige, eigenständig variierbare Betriebsweise angesetzt werden und die Wasserstoffspeicherbetriebsweise als abhängige Betriebsweise beibehalten werden.

Bei längerer Speicherung von Wasserstoff treten nicht vernachlässigbare Verluste auf. Die Verlustrate liegt - je nach Art der Speicherung - bei mindestens 0,1 % der gespeicherten Menge an Wasserstoff pro Tag und kann bis zu 0,5 % pro Tag betragen. Aus diesem Grund sollten in die Kostenfunktion vorzugsweise auch Verluste an im Wasserstoffspeicher befindlichem Wasserstoff eingehen.

Vorzugsweise berücksichtigt die Steuereinrichtung beim Variieren der Betriebsweisen einen minimalen und einen maximalen Ladezustand des elektrischen Energiespeichers und/oder einen mittleren Ladezustand des elektrischen Energiespeichers und/oder einen minimalen und einen maximalen Füllstand des Wasserstoffspeichers und/oder einen mittleren Füllstand des Wasserstoffspeichers. Durch die Berücksichtigung derartiger Größen - sei es als zu beachtende Randbedingungen, sei es durch direktes Eingehen in die Kostenfunktion - kann erreicht werden, dass der elektrische Energiespeicher und/oder der Wasserstoffspeicher jederzeit und in beide Richtungen - sowohl zum Aufnehmen von elektrischer Energie bzw. Wasserstoff als auch zum Abgeben von elektrischer Energie bzw. Wasserstoff - eine gewisse Kapazität aufweisen, so dass auf Störungen beim Betrieb der Anlage der Stahlindustrie und/oder der Elektrolyseanlage - gegebenenfalls auch bei Störungen des Versorgungsnetzes, der Stromerzeugungseinrichtung und/oder der Zufuhreinrichtung - durch geänderte Betriebsweisen des elektrischen Energiespeichers und/oder des Wasserstoffspeichers reagiert werden kann.

Die Aufgabe wird weiterhin durch ein Steuerprogramm mit den Merkmalen des Anspruchs 7 gelöst. Erfindungsgemäß umfasst das gesteuerte Gesamtsystem - zusätzlich zu den obenstehend genannten Teilsystemen - als (weiteres) Teilsystem einen Wasserstoffspeicher. Weiterhin sind die Anlage der Stahlindustrie, die Elektrolyseanlage und der Wasserstoffspeicher zum Transfer von Wasserstoff direkt oder indirekt miteinander verbunden. Weiterhin bewirkt die Abarbeitung des Maschinencodes durch die Steuereinrichtung, dass die Steuereinrichtung das Gesamtsystem gemäß einem erfindungsgemäßen Betriebsverfahren steuert.

Die Aufgabe wird weiterhin durch eine Steuereinrichtung mit den Merkmalen des Anspruchs 8 gelöst. Erfindungsgemäß umfasst das gesteuerte Gesamtsystem - zusätzlich zu den obenstehend genannten Teilsystemen - als (weiteres) Teilsystem einen Wasserstoffspeicher. Weiterhin sind die Anlage der Stahlindustrie, die Elektrolyseanlage und der Wasserstoffspeicher zum Transfer von Wasserstoff direkt oder indirekt miteinander verbunden. Weiterhin ist die Steuereinrichtung mit einem erfindungsgemäßen Steuerprogramm programmiert, so dass die Steuereinrichtung bei Abarbeitung des Maschinencodes des Steuerprogramms das Gesamtsystem gemäß einem erfindungsgemäßen Betriebsverfahren steuert.

Die Aufgabe wird weiterhin durch ein Gesamtsystem mit den Merkmalen des Anspruchs 9 gelöst. Erfindungsgemäß ist vorgesehen,

- dass das gesteuerte Gesamtsystem - zusätzlich zu den obenstehend genannten Teilsystemen - als (weiteres) Teilsystem einen Wasserstoffspeicher umfasst,
- dass die Anlage der Stahlindustrie, die Elektrolyseanlage und der Wasserstoffspeicher zum Transfer von Wasserstoff direkt oder indirekt miteinander verbunden sind und
- dass die Steuereinrichtung als erfindungsgemäße Steuereinrichtung ausgebildet ist, die bei Abarbeitung des Maschinencodes des Steuerprogramms das Gesamtsystem gemäß einem erfindungsgemäßen Betriebsverfahren steuert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1    ein Gesamtsystem,
FIG 2    ein Ablaufdiagramm,
FIG 3    ein weiteres Gesamtsystem,
FIG 4    ein weiteres Ablaufdiagramm und
FIG 5    eine Anlage der Stahlindustrie.

Beschreibung der Ausführungsformen

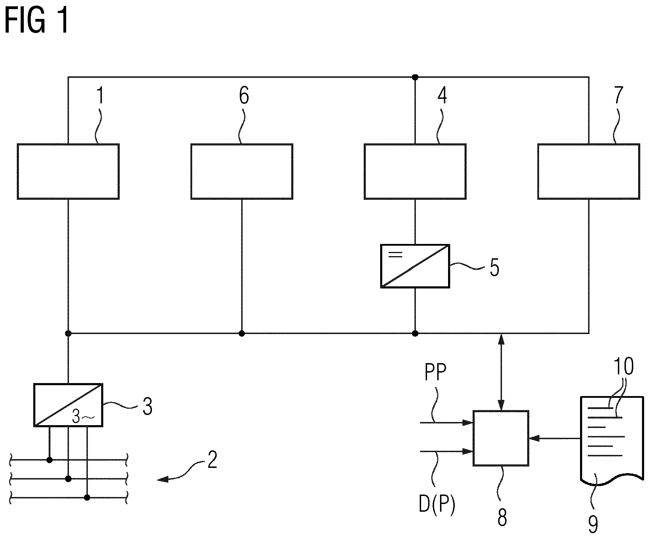

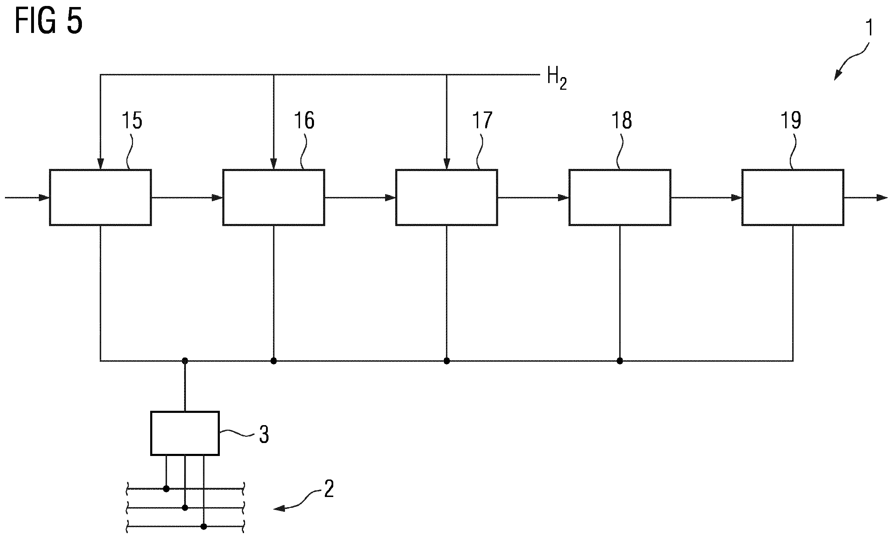

Gemäß FIG 1 umfasst ein Gesamtsystem als Teilsystem eine Anlage 1 der Stahlindustrie. Eine mögliche Ausgestaltung der Anlage 1 wird später in Verbindung mit FIG 5 näher erläutert werden. Die Anlage 1 kann mehrere Komponenten aufweisen. In der Regel weist die Anlage 1 mindestens eine Komponente auf, die einer Gießeinrichtung, mittels derer flüssiger Stahl gegossen wird, technologisch vorgeordnet ist. Beispiele derartiger Komponenten sind eine eisenerzeugende Komponente (beispielsweise eine DRI-Anlage), ein Lichtbogenofen, ein Konverter und eine Pfannenanlage.

Die Anlage 1 verbraucht in ihrem Betrieb elektrische Energie. Die Anlage 1 kann die elektrische Energie aus einem elektrischen Versorgungsnetz 2 beziehen, mit dem die Anlage 1 direkt (nicht dargestellt) oder indirekt (beispielsweise über einen Umrichter 3) verbunden ist. Das Versorgungsnetz 2 ist üblicherweise ein Drehstromnetz und damit ein mehrphasiges Versorgungsnetz. Das Drehstromnetz wird oftmals mit einer Mittelspannung im Bereich von 20 kV bis 30 kV oder mit einer Hochspannung von 110 kV betrieben.

Das Gesamtsystem umfasst als weiteres Teilsystem eine Elektrolyseanlage 4. Auch die Elektrolyseanlage 4 verbraucht in ihrem Betrieb elektrische Energie. Die Elektrolyseanlage 4 ist daher ebenfalls mit dem Versorgungsnetz 2 verbunden. Die Elektrolyseanlage 4 benötigt für ihren Betrieb eine Gleichspannung. Der Elektrolyseanlage 4 ist daher üblicherweise ein Gleichrichter 5 vorgeordnet, so dass nur eine indirekte Verbindung mit dem Versorgungsnetz 2 besteht.

Das Gesamtsystem umfasst als weiteres Teilsystem einen elektrischen Energiespeicher 6. Der Energiespeicher 6 ist zumindest zum Aufnehmen von elektrischer Energie, eventuell auch zum Abgeben von elektrischer Energie, direkt oder indirekt mit dem Versorgungsnetz 2 verbunden. Der Energiespeicher 6 ist weiterhin zum Abgeben elektrischer Energie mit der Anlage 1 und der Elektrolyseanlage 4 verbunden. Nimmt der Energiespeicher 6 elektrische Energie auf, wird sie stets aus dem Versorgungsnetz 2 bezogen. Gibt der Energiespeicher 6 elektrische Energie ab, wird sie primär zur Deckung des Bedarfs der Anlage 1 und der Elektrolyseanlage 4 und nur sekundär zur Einspeisung in das Versorgungsnetz 2 verwendet. Im Ergebnis kann somit - je nachdem, ob die vom Energiespeicher 6 abgegebene elektrische Energie größer oder kleiner als die von der Anlage 1 und Elektrolyseanlage 4 verbrauchte elektrische Energie ist - temporär elektrische Energie in das Versorgungsnetz 2 eingespeist oder aus dem Versorgungsnetz 2 bezogen werden.

Es muss einstellbar sein, ob und in welchem Umfang dem Energiespeicher 6 elektrische Energie zugeführt wird bzw. ob und in welchem Umfang der elektrische Energiespeicher 6 elektrische Energie abgibt. Zu diesem Zweck ist in der Regel eine bidirektional betreibbare Umrichtereinheit vorhanden. Diese Umrichtereinheit ist in FIG 1 nicht mit dargestellt. Sie wird vielmehr als Bestandteil des Energiespeichers 6 angesehen.

Die genaue Art und Weise der elektrischen Verbindung der Anlage 1, der Elektrolyseanlage 4 und des Energiespeichers 6 untereinander und mit dem Versorgungsnetz 2 ist von untergeordneter Bedeutung. Insbesondere können den verschiedenen Teilsystemen 1, 4 und 6 nach Bedarf Gleichrichter 5, Wechselrichter und sonstige Umrichter 3 zugeordnet sein. Es sollte jedoch gewährleistet sein, dass ein Transfer elektrischer Energie vom Energiespeicher 6 zu der Anlage 1 und der Elektrolyseanlage 4 ohne Umweg über das Versorgungsnetz 2 möglich ist.

Die Anlage 1 benötigt für ihren Betrieb weiterhin auch Wasserstoff. Die Anlage 1 und die Elektrolyseanlage 4 sind daher zum Transfer von Wasserstoff direkt oder indirekt miteinander verbunden. Etwaige Pumpen, Ventile und dergleichen sind in FIG 1 nicht mit dargestellt.

Das Gesamtsystem umfasst als weiteres Teilsystem einen Wasserstoffspeicher 7. Der Wasserstoffspeicher 7 kann als Speicher im engeren Sinne ausgebildet sein, also als dedizierter Wasserstoffspeicher. Auch das Leitungsnetz, über das Wasserstoff transportiert wird, weist jedoch eine gewisse Speicherkapazität auf und kann als Wasserstoffspeicher 7 im Sinne der vorliegenden Erfindung dienen. Im Falle eines eigenen, dedizierten Speichers kann der Speicher alternativ überirdisch oder unterirdisch angeordnet sein. Der Wasserstoffspeicher 7 ist zum Aufnehmen von Wasserstoff direkt oder indirekt mit der Elektrolyseanlage 4 verbunden und zum Abgeben von Wasserstoff direkt oder indirekt mit der Anlage 1 verbunden. Aufgrund des Wasserstoffspeichers 7 sind der Betrieb der Anlage 1 und der Elektrolyseanlage 4 flexibler gestaltbar.

Es ist möglich, dass der von der Elektrolyseanlage 4 erzeugte Wasserstoff stets dem Wasserstoffspeicher 7 zugeführt wird und der von der Anlage 1 benötigte Wasserstoff stets von dem Wasserstoffspeicher 7 geliefert wird, so dass der Wasserstoffspeicher 7 sozusagen als Umschlagstation für den Wasserstoff dient. Es ist aber auch eine direkte Verbindung der Anlage 1 und der Elektrolyseanlage 4 möglich.

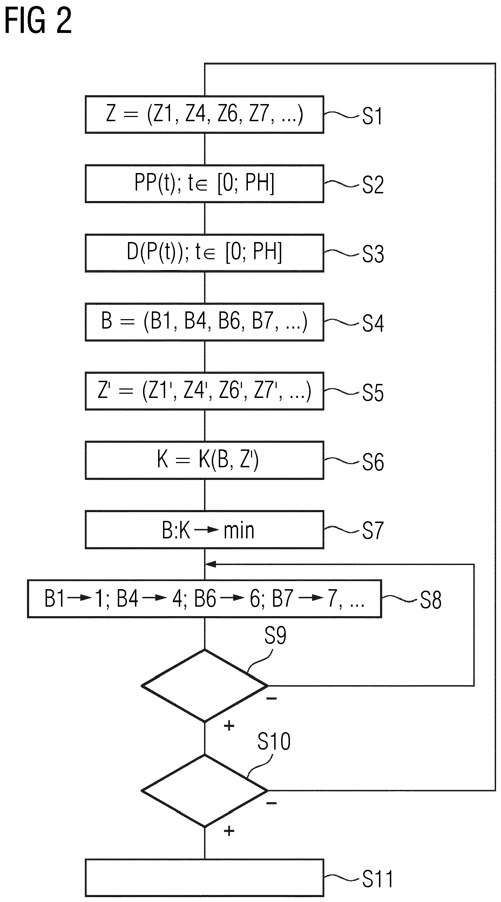

Das Gesamtsystem umfasst weiterhin eine Steuereinrichtung 8. Die Steuereinrichtung 8 ist mit einem Steuerprogramm 9 programmiert. Das Steuerprogramm 9 umfasst Maschinencode 10, der von der Steuereinrichtung 8 abarbeitbar ist. Aufgrund der Programmierung mit dem Steuerprogramm 9 arbeitet die Steuereinrichtung 8 den Maschinencode 10 ab. Die Abarbeitung des Maschinencodes 10 durch die Steuereinrichtung 8 bewirkt, dass die Steuereinrichtung 8 das Gesamtsystem gemäß einem Betriebsverfahren steuert, das nachstehend in Verbindung mit FIG 2 näher erläutert wird. Noch bevor das erfindungsgemäße Betriebsverfahren erläutert wird, wird jedoch darauf hingewiesen, dass die Steuereinrichtung 8 nachstehend zwar als einheitliche Steuereinrichtung 8 erläutert wird, die die Teilsysteme 1, 4, 6 und 7 des Gesamtsystems gemeinsam steuert. Die Steuereinrichtung 8 kann jedoch ebenso für die Steuerung der Teilsysteme 1, 4, 6 und 7 jeweils eine eigene Teil-Steuereinrichtung aufweisen. In diesem Fall müssen zwischen den Teil-Steuereinrichtungen ein entsprechender Informationsaustausch und eine entsprechende Abstimmung bzw. Koordination erfolgen.

Gemäß FIG 2 wird der Steuereinrichtung 8 in einem Schritt S1 ein aktueller Zustand Z des Gesamtsystems bekannt. Der aktuelle Zustand Z umfasst für die Teilsysteme 1, 4, 6 und 7 jeweils einen aktuellen Teilzustand Z1, Z4, Z6, Z7. Die Ziffer des jeweiligen aktuellen Teilzustands Z1, Z4, Z6, Z7 stimmt mit dem Bezugszeichen des jeweiligen Teilsystems 1, 4, 6 und 7 überein.

Beispielsweise kann der Teilzustand Z1 - das Vorhandensein entsprechender Komponenten der Anlage 1 vorausgesetzt - folgende Größen umfassen:

- den Produktionsfortschritt einer eisenerzeugenden Anlage,
- den Produktionsfortschritt eines Lichtbogenofens,
- einen Prozesszustand einer Stranggießmaschine,
- eine Temperatur eines einem Walzwerk vorgeordneten Ofens,
- Verschleißzustände von Arbeitswalzen von Walzgerüsten des Walzwerks,
- ob in den Walzgerüsten des Walzwerks gerade Walzstiche ausgeführt werden.

Der Teilzustand Z1 kann weiterhin umfassen, welche Materialien sich in welchem Zustand momentan in der Anlage 1 befinden. Beispielsweise kann der Teilzustand Z1 - das Vorhandensein entsprechender Materialien in entsprechenden Komponenten der Anlage 1 vorausgesetzt - folgende Größen umfassen:

- Menge und Zustand einer Charge in einem Lichtbogenofen oder in einer Pfanne,
- Zeitdauern, für welche sich Walzgüter bereits in einem Ofen befinden,
- Temperaturen der Walzgüter.

Der Teilzustand Z4 kann beispielsweise eine Temperatur und eine chemische Zusammensetzung der Elektrolyseflüssigkeit der Elektrolyseanlage 4 und einen Verschleißzustand der Elektrolyseanlage 4 umfassen.

Der Teilzustand Z6 umfasst zumindest den Ladezustand des Energiespeichers 6, also das Ausmaß, zu dem der Energiespeicher 6 geladen ist. Der Teilzustand Z6 kann auch weitere Größen umfassen, beispielsweise eine Temperatur des Energiespeichers 6 oder einen maximal möglichen oder zulässigen Lade- und Entladestrom. Weiterhin kann der Teilzustand Z6 einen Verschleißzustand des Energiespeichers 6 umfassen.

In analoger Weise umfasst der Teilzustand Z7 zumindest den Füllstand des Wasserstoffspeichers 7, also das Ausmaß, zu dem der Wasserstoffspeichers 7 gefüllt ist. Der Teilzustand Z7 kann auch weitere Größen umfassen, beispielsweise eine Temperatur und/oder einen Gasdruck des Wasserstoffspeichers 7 oder einen maximal möglichen oder zulässigen Fluss an Wasserstoffstrom beim Füllen und Entleeren des Wasserstoffspeichers 7.

In einem Schritt S2 wird der Steuereinrichtung 8 ein gewünschter Produktionsplan PP der Anlage 1 bekannt. Beispielsweise kann der Produktionsplan PP der Steuereinrichtung 8 von einer Bedienperson (nicht dargestellt) vorgegeben werden. Der Produktionsplan PP legt fest, welche Endprodukte mittels der Anlage 1 aus welchen Ausgangsmaterialien erzeugt werden sollen und welche Eigenschaften die Endprodukte aufweisen sollen. In der Regel legt der Produktionsplan PP auch fest, welche Zwischenprodukte erzeugt werden sollen und bis wann ein bestimmtes Produkt produziert werden soll. Der Produktionsplan PP erstreckt sich über einen Prognosehorizont PH. Der Prognosehorizont PH liegt in aller Regel mindestens bei mehreren Stunden, oftmals sogar im Bereich von mehreren Tagen.

Beispielsweise kann der Produktionsplan PP - das Vorhandensein entsprechender Komponenten der Anlage 1 vorausgesetzt - folgende Größen umfassen:

- eine Menge an Roheisen, die pro Stunde oder pro Tag mittels einer DRI-Anlage (DRI = direct reduction of iron) produziert werden soll;

- Mengen, chemische Zusammensetzungen und Temperaturen sowie Fertigstellungszeitpunkte für mittels eines Lichtbogenofens hergestellte Metallschmelzen;
- Gießformat und Gießgeschwindigkeit einer Stranggießanlage sowie zu vergießende Mengen und Güten an Stahl;
- Zeitpunkte, zu denen Walzgüter einem Walzwerk zugeführt werden sollen, und welche Temperaturen die Walzgüter zu diesen Zeitpunkten aufweisen sollen;
- Stichpläne für dem Walzwerk zugeführte Walzgüter;
- gewünschte geometrische Eigenschaften (beispielsweise Dicke, Breite, Profil, Kontur, Planheit) und Materialeigenschaften (beispielsweise Materialfestigkeit, Streckgrenze) von Walzgütern nach dem Walzen in dem Walzwerk.

In einem Schritt S3 werden der Steuereinrichtung 8 Daten D bekannt, durch die für den Prognosehorizont PH mindestens ein erwarteter Preis P für elektrische Energie bestimmt ist, soweit die elektrische Energie aus dem Versorgungsnetz 2 bezogen wird. Der erwartete Preis P ist zumindest als Funktion der Zeit t definiert. Er kann auch von weiteren Umständen abhängig sein, beispielsweise der Menge an bezogener Wirkleistung, der bezogenen Blindleistung, der Anteile an Oberschwingungen in der bezogenen elektrischen Energie und dem Anteil an Unsymmetrien zwischen den verschiedenen Phasen des Versorgungsnetzes 2. Insbesondere ist Spitzenlaststrom teuer, belastet Blindleistung das Versorgungsnetz 2, ohne dass sie zur Wirkleistung beiträgt, und können Oberschwingungen und Unsymmetrien Störungen in anderen Verbrauchern hervorrufen und auch von Menschen unangenehm empfunden werden (Stichwort "Flicker"). Auch wird in das Versorgungsnetz 2 rückgespeiste elektrische Energie oftmals anders vergütet als aus dem Versorgungsnetz 2 bezogene elektrische Energie.

Gegebenenfalls können der Produktionsplan PP und die Daten D für den Preis P der Steuereinrichtung 8 in den Schritten S2 und S3 zunächst für unterschiedliche Zeithorizonte bekannt werden. In diesem Fall ist der Prognosehorizont PH durch den kleineren der beiden Zeithorizonte bestimmt.

In einem Schritt S4 setzt die Steuereinrichtung 8 für den Prognosehorizont PH eine Betriebsweise B für das Gesamtsystem an. Die Betriebsweise B umfasst - analog zum aktuellen Zustand Z - für die Teilsysteme 1, 4, 6 und 7 jeweils eine Teilbetriebsweise B1, B4, B6, B7. Die Teilbetriebsweisen B1, B4, B6, B7 definieren für jeden Zeitpunkt, wie das jeweilige Teilsystem 1, 4, 6, 7 betrieben (= gesteuert) wird. Die Teilbetriebsweisen B1, B4, B6, B7 können sekundengenau zeitaufgelöst sein. Die angesetzten Betriebsweisen B, B1, B4, B6, B7 sind zunächst nur vorläufig.

Die Teilbetriebsweise B1 für die Anlage 1 - nachfolgend auch als Anlagenbetriebsweise B1 bezeichnet - wird von der Steuereinrichtung 8 derart festgelegt, dass die Vorgaben des Produktionsplans PP erfüllt werden. Je nach Ausgestaltung der Anlage 1 bzw. deren Komponenten kann die Anlagenbetriebsweise B1 beispielsweise umfassen:

- die Mengen an Materialien und Energie, die einer DRI-Anlage zugeführt werden, beispielsweise die Menge an Eisenerz, die Menge an Wasserstoff und die Menge an elektrischem Strom;
- die Mengen an Materialien und Energie, die einem Lichtbogenofen zugeführt werden, beispielsweise die Menge an Roheisen, Zuschlagstoffen, Legierungselementen, elektrischer Energie, Wasserstoff und sonstigen Prozessmedien;
- die Abzugsgeschwindigkeit, mit der ein gegossener Metallstrang aus einer Stranggießkokille abgezogen wird, die Amplitude und die Frequenz einer Kokillenoszillation, das Ausmaß einer Primärkühlung und einer Sekundärkühlung und die Menge an zugeführtem Gießpulver (die Menge an zuzuführendem Metall ist durch das Gießformat und die Abzugsgeschwindigkeit bestimmt);
- Walzgeschwindigkeiten und Anstellungen von Walzgerüsten eines Walzwerks und Einstellungen von Kühleinrichtungen einer dem Walzwerk nachgeordneten Kühlstrecke.

Die Teilbetriebsweise B4 für die Elektrolyseanlage 4 - nachfolgend auch als Elektrolysenbetriebsweise B4 bezeichnet - kann von der Steuereinrichtung 8 oftmals eigenständig und relativ flexibel festgelegt werden. Die Steuereinrichtung 8 muss lediglich beachten, dass der Bedarf der Anlage 1 an Wasserstoff gedeckt wird, der Füllgrad des Wasserstoffspeichers 7 nicht unter 0 % fällt und nicht über 100 % steigt und im übrigen die Auslegungsgrenzen der Elektrolyseanlage 4 beachtet werden. Alternativ zu einem nahezu freien Ansatz für die Elektrolysenbetriebsweise B4 ist es auch möglich, auch für die Elektrolyseanlage 4 einen Produktionsplan vorzugeben, der bei der Ermittlung der Elektrolysenbetriebsweise B4 berücksichtigt werden muss. Je nach Lage des Einzelfalls kann ein mehr oder minder gleichmäßiger Betrieb der Elektrolyseanlage 4 sinnvoll sein. Es kann aber auch sinnvoll sein, den Betrieb der Elektrolyseanlage 4 zeitlich zu variieren, insbesondere dann, wenn die Kosten für die elektrische Energie stark schwanken.

Die Teilbetriebsweise B6 für den Energiespeicher 6 - nachfolgend auch als Energiespeicherbetriebsweise B6 bezeichnet - kann von der Steuereinrichtung 8 oftmals ebenfalls eigenständig und relativ flexibel festgelegt werden. Die Steuereinrichtung 8 muss lediglich beachten, dass der Ladezustand des Energiespeichers 6 nicht unter 0 % fällt und nicht über 100 % steigt und im übrigen die Auslegungsgrenzen der Energiespeichers 6 (beispielsweise der maximale Ladestrom und der maximale Entladestrom) beachtet werden.

Die Teilbetriebsweise B7 für den Wasserstoffspeicher 7 - nachfolgend auch als Wasserstoffspeicherbetriebsweise B7 bezeichnet - kann von der Steuereinrichtung 8 meist nicht mehr frei festgelegt werden. Vielmehr ist sie durch die Anlagenbetriebsweise B1 (und damit den Verbrauch an Wasserstoff) und die Elektrolysenbetriebsweise B4 (und damit die Erzeugung von Wasserstoff) festgelegt. Der Wasserstoffspeicher 7 ermöglicht zumindest in gewissem Umfang die Entkopplung des Betriebs der Anlage 1 und der Elektrolyseanlage 4 voneinander und damit den flexiblen Betrieb der Elektrolyseanlage 4.

In einem Schritt S5 ermittelt die Steuereinrichtung für das Ende des Prognosehorizonts PH einen erwarteten finalen Gesamtzustand Z'. Der erwartete finale Gesamtzustand Z' umfasst - analog zum aktuellen Zustand Z - für die Teilsysteme 1, 4, 6 und 7 jeweils einen erwarteten finalen Teilzustand Z1', Z4', Z6', Z7'. Die Ermittlung des jeweiligen erwarteten finalen Teilzustands Z1', Z4', Z6', Z7' erfolgt unter Verwertung des jeweiligen aktuellen Teilzustands Z1, Z4, Z6, Z7 und der jeweiligen Teilbetriebsweise B1, B4, B6, B7. Konkret ermittelt die Steuereinrichtung 8 den jeweiligen erwarteten finalen Teilzustand Z1', Z4', Z6', Z7' durch Fortschreibung des jeweiligen aktuellen Teilzustands Z1, Z4, Z6, Z7 anhand der jeweiligen Teilbetriebsweise B1, B4, B6, B7.

In einem Schritt S6 ermittelt die Steuereinrichtung 8 den Wert einer Kostenfunktion K. In die Kostenfunktion K können verschiedene Kostenfaktoren eingehen. Die Kostenfunktion K ist als gewichtete oder ungewichtete Summe der einzelnen Kostenfaktoren definiert. Als Kostenfaktoren kommen beispielsweise die Kosten für den Bezug elektrischer Energie aus dem Versorgungsnetz 2, die Betriebsweisen B1, B4, B6, B7 der Teilsysteme 1, 4, 6, 7, Bewertungen der erwarteten finalen Zustände Z1', Z4', Z6', Z7' und eine Produktivität der Anlage der Stahlindustrie in Frage.

Zur Ermittlung der Kosten für den Bezug elektrischer Energie aus dem Versorgungsnetz 2 kann die Steuereinrichtung 8 beispielsweise anhand der ermittelten Teilbetriebsweisen B1, B4, B6, B7 den Bezug an elektrischer Energie aus dem Versorgungsnetz 2 und hierauf aufbauend in Verbindung mit dem bekannten Preis P die zugehörigen Kosten ermitteln. Die Ermittlung kann mit derselben Zeitauflösung erfolgen, mit der auch die Teilbetriebsweisen B1, B4, B6, B7 bestimmt sind, beispielsweise sekundengenau. Die Ermittlung kann auch mit einer gröberen Zeitauflösung erfolgen, beispielsweise mit einer Auflösung von 1 Minuten oder 15 Minuten. Auch ist es möglich, zwar zunächst mit einer hohen zeitlichen Auflösung zu arbeiten, beispielsweise sekundengenau, hierauf aufbauend jedoch für größere Zeiträume (beispielsweise 1 Minute, 5 Minuten, 15 Minuten) statistische Auswertungen vorzunehmen, beispielsweise Mittelwerte, maximale Werte, minimale Werte, Streuungen usw. zu ermitteln.

Die Anlagenbetriebsweise B1 kann beispielsweise im Sinne der Produktivität, eines ressourcenschonenden Betriebs, einer Bewertung des Verschleißes der Anlage 1 usw. bewertet werden. Ähnliche Bewertungen sind auch für die Elektrolysenbetriebsweise B4, die Energiespeicherbetriebsweise B6 und die Wasserstoffspeicherbetriebsweise B7 möglich.

Die Bewertung des erwarteten finalen Anlagenzustands Z1' kann einen Anteil umfassen, der beispielsweise unter Verwertung eines energetischen Zustands der Anlage 1 - dies umfasst auch den energetischen Zustand von in der Anlage 1 befindlichen Produkten - ermittelt wird. Dadurch ist die Steuereinrichtung 8 in der Lage, die Bewertung des erwarteten finalen Anlagenzustands Z1' unter Berücksichtigung einer Energiemenge zu ermitteln, die beim späteren Betrieb der Anlage 1 über den Prognosehorizont PH hinaus aufgebracht werden muss.

Bei einem Lichtbogenofen oder einer Pfanne kann beispielsweise die Temperatur der in dem Lichtbogenofen bzw. der Pfanne befindlichen Schmelze berücksichtigt werden. Bei einem Lichtbogenofen kann weiterhin beispielsweise berücksichtigt werden, dass für die Herstellung einer Schmelze zwar ein Zeitfenster zur Verfügung steht, das größer als die für die Herstellung der Schmelze minimal erforderliche Zeit ist, unter Umständen aber aufgrund der Art und Weise der Aufheizung später überproportional mehr Energie erforderlich ist, um die Schmelze auf ihre Zieltemperatur aufzuheizen.

Bei einer Warmbreitbandstraße kann beispielsweise berücksichtigt werden, dass in einem Brammenofen befindliche Brammen noch nicht vollständig aufgeheizt sind, für das vollständige Aufheizen also noch später (= nach Ablauf des Prognosehorizonts PH) eine bestimmte Energiemenge erforderlich ist. Auch kann berücksichtigt werden, dass Brammen einem Walzwerk aufgrund einer nicht vollständigen Aufheizung im Brammenofen später mit einer niedrigeren Temperatur zugeführt werden. Aufgrund der niedrigeren Temperatur sind beim Walzen höhere Walzkräfte und Walzmomente und damit ein höherer Energiebedarf erforderlich. Auch der Verschleiß der Arbeitswalzen der Walzgerüste des Walzwerks und die hierdurch hervorgerufenen Kosten können in einem derartigen Fall größer sein.

In der Bewertung des erwarteten finalen Anlagenzustands Z1' kann weiterhin auch der durch den Betrieb der Anlage 1 angefallene Verschleiß berücksichtigt werden, also die Kosten durch den Verschleiß, der während des Produktionshorizonts PH aufgrund der Anlagenbetriebsweise B1 auftritt.

Die Bewertung des erwarteten finalen Elektrolysenzustands Z4' kann - insbesondere bei einer Elektrolyseanlage 4, die mit einer hohen Temperatur arbeitet - ebenfalls einen Anteil umfassen, der unter Verwertung eines energetischen Zustands der Elektrolyseanlage 4 ermittelt wird. Auch können in die Bewertung Konzentrationen an Elektrolytflüssigkeiten und Verschleißzustände eingehen.

Die Bewertung des erwarteten finalen Energiespeicherzustands Z6' kann einen Anteil umfassen, mit dem der durch den Betrieb des Energiespeichers 6 angefallene Verschleiß berücksichtigt wird, also die Kosten durch den Verschleiß, der während des Produktionshorizonts PH aufgrund der Speicherbetriebsweise B6 auftritt.

Die Bewertung des erwarteten finalen Wasserstoffspeicherzustands Z7' ist meist sehr einfach. In der Regel handelt es sich lediglich um eine Konstante.

Die Bewertung der Produktivität der Anlage 1 ist meist ebenfalls relativ einfach. Sie ist in der Regel umso besser (das heißt der entsprechende Kostenfaktor umso kleiner), je größer die Menge an Ausgangsprodukt ist, die in einer bestimmten Zeiteinheit erzeugt wird. Im einfachsten Fall ist der entsprechende Kostenfaktor proportional zu der Zeit, die für die Produktion einer zuvor einmalig festgelegten Menge an Ausgangsprodukt erforderlich ist.

In die Kostenfunktion K können auch noch weitere Kostenfaktoren eingehen. Nachfolgend wird beispielhaft auf einige mögliche weitere Kostenfaktoren eingegangen.

So kann beispielsweise ein Kostenfaktor berücksichtigt werden, der für die Kosten für den sonstigen Betrieb der Anlage 1 steht, also die Kosten, die sich für den betrachteten Prognosehorizont PH ergeben, aber ohne Berücksichtigung der Kosten für die elektrische Energie. Die Kosten für den sonstigen Betrieb der Anlage 1 können beispielsweise die Kosten für benötigte Einsatzstoffe wie Ausgangsmaterialien und Prozessmedien oder die Kosten für die Aufbereitung von Prozessmedien oder Kosten aufgrund von Umweltbelastungen umfassen. Der Kostenfaktor für den sonstigen Betrieb der Anlage 1 kann weiterhin Abschreibungen umfassen.

In analoger Weise können auch Kostenfaktoren berücksichtigt werden, die für die Kosten für den sonstigen Betrieb der Elektrolyseanlage 4, des Energiespeichers 6 und des Wasserstoffspeichers 7 stehen. Für den Kostenfaktor für den Wasserstoffspeicher 7 können insbesondere auch Verluste an im Wasserstoffspeicher 7 befindlichem Wasserstoff berücksichtigt werden.

Weiterhin können auch andere Kosten des Gesamtsystems berücksichtigt werden, sofern derartige Kosten anfallen Beispiele derartiger Kosten sind Umweltabgaben oder staatliche Förderungen.

In die Kostenfunktion K gehen somit im Ergebnis alle freien Steuervariablen für alle Teilsysteme 1, 4, 6, 7 ein.

In einem Schritt S7 löst die Steuereinrichtung 8 ein Optimierungsproblem. Die Lösung des Optimierungsproblems ist die Kombination derjenigen Teilbetriebsweisen B1, B4, B6, B7 - jeweils betrachtet über den Produktionshorizont PH -, bei der die Kostenfunktion K insgesamt minimal ist. Die Kostenfunktion K ist somit ein Funktional, das minimiert werden soll und auf Basis eines Anfangswertproblems mit Endbedingungen berechnet wird. Im Rahmen des Lösen des Optimierungsproblems variiert die Steuereinrichtung 8 für den Prognosehorizont PH die angesetzten Teilbetriebsweisen B1, B4, B6, B7. Das Variieren erfolgt unter Berücksichtigung des Produktionsplans PP und weiterer Randbedingungen wie beispielsweise Auslegungsgrenzen der verschiedenen Teilsysteme 1, 4, 6, 7. Sofern vorgegeben, wird auch ein Produktionsplan der Elektrolyseanlage 4 mit berücksichtigt.

Vorzugsweise berücksichtigt die Steuereinrichtung 8 beim Variieren der Teilbetriebsweisen B1, B4, B6, B7 weiterhin einen minimalen und einen maximalen Ladezustand des elektrischen Energiespeichers 6. Die Berücksichtigung kann insbesondere durch sogenannte Ungleichungsnebenbedingungen erfolgen, in denen gefordert wird, dass der Ladezustand des elektrischen Energiespeichers 6 nie kleiner als der minimale Ladezustand wird und nie größer als der maximale Ladezustand wird. Ebenso berücksichtigt die Steuereinrichtung 8 beim Variieren der Teilbetriebsweisen B1, B4, B6, B7 vorzugsweise auch einen minimalen und einen maximalen Füllgrad des Wasserstoffspeichers 7. Die Berücksichtigung kann in analoger Weise durch Ungleichungsnebenbedingungen erfolgen, in denen gefordert wird, dass der Füllgrad des Wasserstoffspeichers 7 nie kleiner als der minimale Füllgrad wird und nie größer als der maximale Füllgrad wird.

Weiterhin berücksichtigt die Steuereinrichtung 8 beim Variieren der Teilbetriebsweisen B1, B4, B6, B7 vorzugsweise auch einen mittleren Ladezustand des elektrischen Energiespeichers 6 und/oder einen mittleren Füllstand des Wasserstoffspeichers 7. Die Berücksichtigung kann in beiden Fällen dadurch erfolgen, dass Abweichungen von dem mittleren Ladezustand bzw. dem mittleren Füllstand mit - wenn auch relativ geringen - Faktoren gewichtet in die Kostenfunktion K eingehen und so "bestraft" werden.

Beim Variieren der Betriebsweisen AB, SB kann die Steuereinrichtung 10 zusätzlich auch weitere Bedingungen berücksichtigen. Beispiele derartiger Bedingungen können beispielsweise Vorgaben für die erwarteten finalen Teilzustände Z1', Z4', Z6', Z7' sein. Auch kann gefordert sein, dass keine Energie in das Versorgungsnetz 5 eingespeist wird oder dass die aus dem Versorgungsnetz 5 bezogene Energie einen vorgegebenen Maximalwert nicht übersteigt. Beispielsweise kann als Vorgabe festgelegt sein, dass der elektrische Energiespeicher 6 am Ende des Prognosehorizonts PH einen ganz bestimmten Ladezustand aufweist oder der Ladezustand des elektrischen Energiespeichers 6 am Ende des Prognosehorizonts PH in einem vorbestimmten Rahmen liegt. Analoge Vorgaben sind auch für die anderen Teilsysteme 1, 4 und 7 möglich. Die Berücksichtigung derartiger Bedingungen kann insbesondere durch sogenannte Gleichheitsnebenbedingungen und/oder Ungleichheitsnebenbedingungen erfolgen. Beispielsweise kann als Gleichheitsnebenbedingung gefordert werden, dass der elektrische Energiespeicher 6 und/oder der Wasserstoffspeichers 7 am Ende des Prognosehorizonts PH bestimmte Ladezustände bzw. Füllstände aufweisen. Auch andere Bedingungen sind möglich, beispielsweise dass keine

Energie in das Versorgungsnetz 2 eingespeist wird, dass die aus dem Versorgungsnetz 2 bezogene Energie einen vorgegebenen Maximalwert nicht übersteigt oder dass die Produktion bestimmter Produkte zu einem vorgegebenen Zeitpunkt abgeschlossen ist.

Optimierungsprobleme als solche, deren Ansatz und Vorgehensweisen zum Lösen derartiger Optimierungsprobleme sind Fachleuten bekannt. Sie werden auch im eingangs genannten Stand der Technik vom Ansatz her so ergriffen.

Mit der Ausführung des Schrittes S7 stehen die variierten und dadurch optimierten Teilbetriebsweisen B1, B4, B6, B7 fest. Die Steuereinrichtung 8 kann daher in einem Schritt S8 die Teilsysteme 1, 4, 6, 7 gemäß der variierten Teilbetriebsweisen B1, B4, B6, B7 betreiben. Dies erfolgt zunächst für den Beginn des Prognosehorizonts PH.

In einem Schritt S9 prüft die Steuereinrichtung 8, ob ihr neue Informationen zur Verfügung stehen. Wenn dies nicht der Fall ist, geht die Steuereinrichtung 8 zum Schritt S8 zurück. Bei der erneuten Ausführung des Schrittes S8 betreibt die Steuereinrichtung 8 die Teilsysteme 1, 4, 6, 7 weiterhin gemäß der variierten Teilbetriebsweisen B1, B4, B6, B7. Sie berücksichtigt dabei den Fortschritt in der Zeit t.

Wenn der Steuereinrichtung 8 neue Informationen zur Verfügung stehen, geht die Steuereinrichtung 8 zu einem Schritt S10 über. Im Schritt S10 prüft die Steuereinrichtung 8, ob die Information ein Befehl zum Beenden des Betriebs des Gesamtsystems ist. Wenn dies der Fall ist, beendet die Steuereinrichtung 8 in einem Schritt S11 den Betrieb des Gesamtsystems. Anderenfalls geht die Steuereinrichtung 8 zum Schritt S1 zurück. Je nach Art der neuen Informationen kann die Steuereinrichtung 8 alternativ auch zum Schritt S2 oder zum Schritt S3 zurückgehen.

Im Ergebnis wird durch die Vorgehensweise gemäß FIG 2 die Ermittlung der Teilbetriebsweisen B1, B4, B6, B7 immer wieder mit einem bestimmten Prognosehorizont PH wiederholt. Die Ermittlung wird also im Sinne einer permanenten Vorhersage ausgeführt und laufend an den erwarteten Preis P und den Produktionsplan PP angepasst.

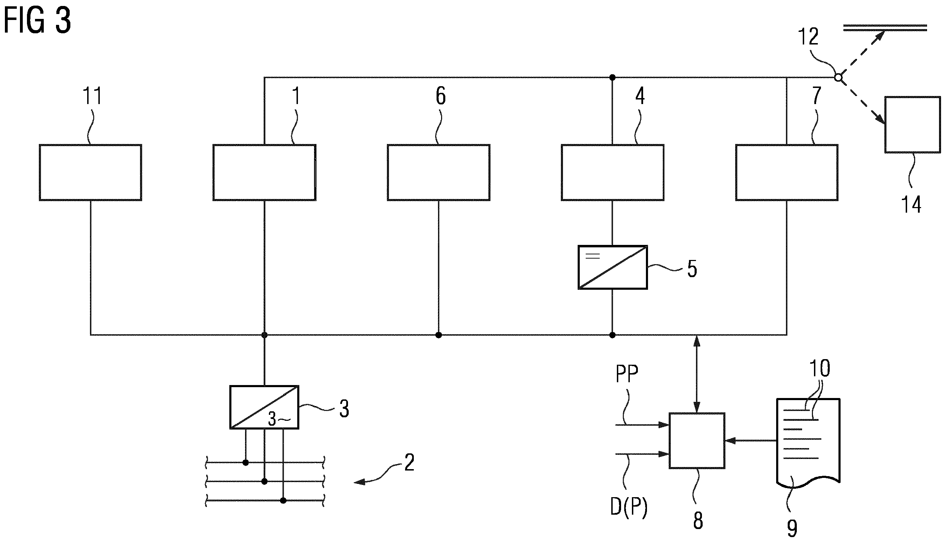

FIG 3 zeigt eine Erweiterung des Gesamtsystems von FIG 1. Gemäß FIG 3 weist das Gesamtsystem als weiteres Teilsystem eine Stromerzeugungseinrichtung 11 auf. Mittels der Stromerzeugungseinrichtung 11 ist auf regenerative Art und Weise - also mit Sonnenlicht oder Windkraft, eventuell auch mittels Wasserkraft oder Geothermie - elektrische Energie erzeugbar. In diesem Fall ist die Stromerzeugungseinrichtung 11 zur Übertragung elektrischer Energie direkt oder indirekt mit den übrigen elektrische Energie aufnehmenden oder abgebenden Teilsystemen 1, 4, 6 und auch dem elektrischen Versorgungsnetz 2 verbunden. Ein für die Stromerzeugungseinrichtung 11 meist erforderlicher Umrichter kann als Bestandteil der Stromerzeugungseinrichtung 11 angesehen werden. Er ist in FIG 3 nicht mit dargestellt. Vorzugsweise ist die Zuführung elektrischer Energie von der Stromerzeugungseinrichtung 11 zu den Teilsystemen 1, 4, 6 ohne Umweg über das Versorgungsnetz 2 möglich.

Gemäß FIG 3 weist das Gesamtsystem als weiteres Teilsystem weiterhin eine Koppeleinrichtung 12 auf. Die Koppeleinrichtung 12 ist einerseits zum Transfer von Wasserstoff direkt oder indirekt mit der Anlage 1 und/oder der Elektrolyseanlage 4 und/oder dem Wasserstoffspeicher 7 verbunden. Andererseits ist die Koppeleinrichtung 12 mit einem externen Transportnetz 13 für Wasserstoff oder einem Zusatzspeicher 14 für Wasserstoff verbunden. Der Zusatzspeicher 14 ist in diesem Fall lösbar mit der Koppeleinrichtung 12 verbunden.

FIG 3 zeigt eine Ausgestaltung, bei der sowohl die Stromerzeugungseinrichtung 11 als auch die Koppeleinrichtung 12 vorhanden sind. Es ist jedoch auch möglich, dass nur die Stromerzeugungseinrichtung 11 vorhanden ist oder nur die Koppeleinrichtung 12 vorhanden ist.

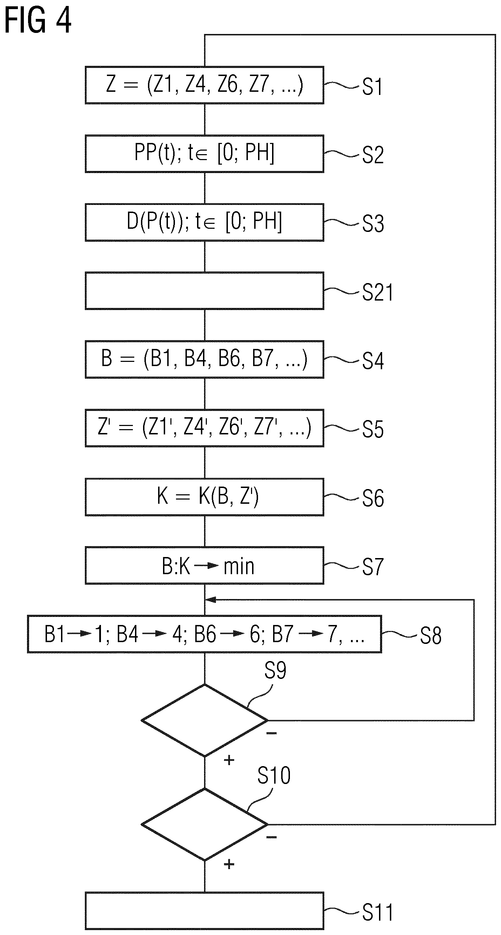

Sofern die Stromerzeugungseinrichtung 11 vorhanden ist, ist die Vorgehensweise von FIG 2 gemäß FIG 4 zunächst dahingehend modifiziert, dass zusätzlich ein Schritt S21 vorhanden ist. Der Schritt S21 ist dem Schritt S4 vorgeordnet. Er kann dem Schritt S4 unmittelbar vorgeordnet sein. Dies ist aber nicht zwingend erforderlich. Im Schritt S21 wird der Steuereinrichtung 8 für den Prognosehorizont PH eine elektrische Energie bekannt, die (voraussichtlich) mittels der Stromerzeugungseinrichtung 11 erzeugt werden kann. Eine derartige Prognose kann beispielsweise unter Verwertung einer lokalen Wettervorhersage für den Standort der Stromerzeugungseinrichtung 11 vorgenommen werden.

Weiterhin ist die Vorgehensweise von FIG 2 dahingehend modifiziert, dass im Schritt S6 bei der Kostenfunktion K die mittels der Stromerzeugungseinrichtung 11 erzeugbare erwartete elektrische Energie berücksichtigt wird. Dadurch ergeben sich im Schritt S7 andere Teilbetriebsweisen B1, B4, B6, B7, für welche die Kostenfunktion K minimal wird.

Sofern die Koppeleinrichtung 12 vorhanden ist, ist die Vorgehensweise von FIG 2 zunächst dahingehend modifiziert, dass die im Schritt S4 angesetzte Wasserstoffspeicherbetriebsweise B7 nunmehr eine freie Variable ist, also nicht mehr durch die Anlagenbetriebsweise B1 und die Elektrolysenbetriebsweise B4 festgelegt ist. Vielmehr kann auch Wasserstoff aus dem Transportnetz 13 oder dem Zusatzspeicher 14 entnommen werden bzw. dem Transportnetz 13 oder dem Zusatzspeicher 14 zugeführt werden. Die Kostenfunktion K wird in diesem Fall um einen Kostenfaktor für das Entnehmen von Wasserstoff aus dem Transportnetz 13 oder dem Zusatzspeicher 14 bzw. das Einspeisen von Wasserstoff in das Transportnetz 13 bzw. den Zusatzspeicher 14 erweitert. Somit berücksichtigt die Steuereinrichtung 8 im Ergebnis beim Variieren der Teilbetriebsweisen B1, B4, B6, B7 im Schritt S7 auch den über die Koppeleinrichtung 12 transferierten Wasserstoff.

FIG 5 zeigt rein beispielhaft eine mögliche Ausgestaltung einer Anlage 1, also einer Anlage der Stahlindustrie.

Gemäß FIG 5 weist die Anlage 1 als eine Komponente eine Direktreduktionsanlage 15 auf. In der Direktreduktionsanlage 15 wird aus Eisenerz Eisenschwamm hergestellt. Die Direktreduktionsanlage 15 benötigt entsprechend der Produktion permanent eine Zufuhr von Wasserstoff und elektrischer Energie.

Gemäß FIG 5 weist die Anlage 1 als weitere Komponente einen Lichtbogenofen 16 auf. Dem Lichtbogenofen 16 kann als Eingangsprodukt beispielsweise unter anderem der in der Direktreduktionsanlage 15 hergestellte Eisenschwamm zugeführt werden. Der Lichtbogenofen 16 erzeugt flüssigen Stahl. Der Energiebedarf des Lichtbogenofens 16 kann innerhalb gewisser Grenzen zeitlich variiert werden. So ist es beispielsweise möglich, die benötigte elektrische Energie im Minutenbereich hochzufahren bzw. herunterzufahren.

Die Anlage 1 kann als weitere Komponente weiterhin eine Pfannenanlage 17 aufweisen. In der Pfannenanlage 17 wird der flüssige Stahl behandelt. Beispielsweise können gezielt Legierungselemente beigefügt werden und/oder - beispielsweise durch Vakuumbehandlung - störende Elemente entfernt werden.

Die Anlage 1 weist gemäß FIG 5 als weitere Komponente eine Stranggießanlage 18 auf. Mittels der Stranggießanlage 18 wird der flüssige Stahl zu einem Strang gegossen. Oftmals wird der gegossene Strang am Ende der Stranggießanlage 18 in einzelne Brammen geschnitten.

Die Brammen werden in einem Walzwerk 19 zu Grobblech oder zu Band weiterverarbeitet. Eine Prognose für den Bedarf an elektrischer Energie des Walzwerks 19 kann anhand des Produktionsplans PP ermittelt werden. Aus dem Produktionsplan PP sind unter anderem geplante Stillstände des Walzwerks 19 sowie zu erzeugende Ausgangsprodukte für einige Stunden im Voraus bekannt, da Brammen zum Aufheizen oder zur Vergleichmäßigung von Temperaturen oftmals mehrere Stunden in einem dem Walzwerk 19 zugeordneten Ofen liegen müssen, bevor sie gewalzt werden können.

Die weiteren Teilsysteme 4, 6 und 7 des Gesamtsystems sind in FIG 5 nicht mit dargestellt. Sie sind aber im Rahmen des Gesamtsystems vorhanden. Gegebenenfalls können auch die Stromerzeugungseinrichtung 11 und die Koppeleinrichtung 12 vorhanden sein. Weiterhin muss die Anlage 1 nicht alle in FIG 5 dargestellten Komponenten 15 bis 19 aufweisen.

Nachstehend werden für die Komponenten 15 bis 19 der Anlage 1 gemäß FIG 5, die Elektrolyseanlage 4 (einschließlich des Wasserstoffspeichers 7) und die Stromerzeugungseinrichtung 11 mögliche Modelle erläutert, die zur Ermittlung des jeweiligen Kostenfaktors verwendet werden können. Diese Modelle sind innerhalb der Steuereinrichtung 8 implementiert und werden von der Steuereinrichtung 8 im Rahmen des Schrittes S6 ausgewertet.

Für das Walzwerk 19 ist es möglich, dass dort keine Eingriffsmöglichkeit besteht. In diesem Fall ist der entsprechende Kostenanteil K19 eine Konstante. In anderen Fällen ist es möglich, die Produktion beispielsweise durch (geringfügige) Streckung eines Auftragsblocks anzupassen. Aufträge werden also etwas langsamer abgearbeitet. In diesem Fall kann der durch das Walzwerk 19 bewirkte Kostenanteil K19 gemäß der Beziehung

$$K19 = k1 + k2T19 \qquad\qquad (1)$$

ermittelt werden. k1 ist eine Konstante mit der Einheit "Währung", beispielsweise 2000 Euro. k2 ist eine Konstante mit der Einheit "Währung pro Zeit", beispielsweise 1000 Euro pro Minute. T19 ist die Zeitdifferenz, um welche die Produktion des Walzwerks 19 verzögert wird, beispielsweise in Minuten.

Die Kosten für die Energie, die zum Betrieb des Walzwerks 19 benötigt wird, sind demgegenüber vernachlässigbar klein. Es ist daher in aller Regel nicht erforderlich, für die Modellierung des Walzwerks 19 im Rahmen des Schrittes S6 ein detaillierteres Modell zu verwenden.

Das Walzwerk 19 verfügt mit einem vorgeordneten Brammenlager auch über einen hinreichend großen Speicher, so dass das Walzwerk 19 von den übrigen Komponenten 15 bis 18 der Anlage 1 entkoppelt betrachtet werden kann. Gegebenenfalls kann dem Walzwerk 19 ein eigener elektrischer Energiespeicher zugeordnet werden. In diesem Fall können der Betrieb des Walzwerks 19 und der Betrieb des eigenen elektrischen Energiespeichers aufeinander abgestimmt werden.

Für den Lichtbogenofen 16 werden - jeweils für den Prognosehorizont PH - eine Funktion v und eine elektrische Sollleistung P16* angesetzt. Die Funktion v ist eine Funktion der Zeit t. Die Sollleistung P* kann eine Konstante sein. Die Sollleistung P16* wird mit der Funktion v multipliziert. Das Ergebnis ist die tatsächliche elektrische Leistung P16, mit welcher der Lichtbogenofen 16 betrieben wird:

$$P16 = v(t)P16^*. \qquad\qquad (2)$$

Die Funktion v ist definiert für positive Werte der Zeit t und weist einen Wertebereich von vmin bis 1 auf, wobei vmin seinerseits einen Wert zwischen 0 und 1 aufweist. vmin ist eine Funktion des Zustands des Lichtbogenofens 16. Durch den aktuellen Wert von vmin wird berücksichtigt, dass es nicht möglich ist, die tatsächliche Leistung P16 in jedem Zustand des Lichtbogenofens 16 beliebig zu reduzieren. Dies ist vielmehr vom Zustand des Lichtbogenofens 16 abhängig. Der Zustand des Lichtbogenofens 16 muss der Steuereinrichtung 8 daher bekannt sein.

Der elektrische Gesamt-Energiebedarf des Lichtbogenofens 16 ist eine Funktion des Verlaufs der Funktion v. Es ist möglich, dass die Steuereinrichtung 8 den elektrischen Gesamt-Energiebedarf des Lichtbogenofens 16 eigenständig ermittelt. Alternativ kann der elektrische Gesamt-Energiebedarf des Lichtbogenofens 16 beispielsweise vorgegeben werden oder über die Energiebilanz (Abstrahlung) des Lichtbogenofens 16 ermittelt werden.

Die Funktion v kann von der Steuereinrichtung 8 genutzt werden, um Einfluss auf die Betriebsweise des Lichtbogenofens 16 zu nehmen. Selbstverständlich verzögert sich die Herstellung einer Charge, wenn die Funktion v einen Wert unterhalb von 1 aufweist. Die Steuereinrichtung 8 kann daher - analog zur Vorgehensweise bei dem Walzwerk 19 - eine zugehörige zeitliche Verzögerung T16 ermitteln und entsprechend bewerten:

$$K16a = k3 + k4T16. \qquad (3)$$

k3 ist eine Konstante mit der Einheit "Währung", beispielsweise 2000 Euro. k4 ist eine Konstante mit der Einheit "Währung pro Zeit", beispielsweise 1000 Euro pro Minute. T16 ist die Zeitdifferenz, um welche die Produktion des Lichtbogenofens 16 verzögert wird, beispielsweise in Minuten.

Dem Kostenfaktor K16a steht jedoch ein erhebliches Einsparpotenzial bei den Energiekosten gegenüber, sofern es gelingt, einen hohen Verbrauch an elektrischer Energie des Lichtbogenofens 16 in Zeiten zu verlagern, in denen die aus dem Versorgungsnetz 2 bezogene elektrische Energie kostengünstig ist. Insbesondere bei dem Lichtbogenofen 16 zeigen sich die Vorteile der vorliegenden Erfindung, wenn also der Betrieb der Anlage 1, der Elektrolyseanlage 4, des elektrischen Energiespeichers 6 und des Wasserstoffspeichers 7 gemeinsam optimiert werden. Noch größer können die Vorteile sein, wenn zusätzlich eigenständig mittels der Stromerzeugungseinrichtung 11 Strom erzeugt werden kann.

Für den Lichtbogenofen 16 kann es von Vorteil sein, weitere Größen und Randbedingungen zu berücksichtigen. Insbesondere muss oftmals berücksichtigt werden, dass die Herstellung einer Charge zu einem bestimmten Zeitpunkt abgeschlossen sein muss, weil die Charge dann - mit oder ohne vorherige Behandlung in der Pfannenanlage 17 - der Stranggießanlage 18 zugeführt werden muss. Dennoch besteht eine erhebliche Flexibilität. Denn die zwingend benötigte Zeit für die Herstellung einer Charge im Lichtbogenofen 16 ist kleiner als die Zeit, in welcher die Charge in der Stranggießanlage 18 vergossen wird. Es ist daher möglich, den Betrieb des Lichtbogenofens 16 in drei Phasen zu unterteilen. In der ersten Phase wird lediglich abgewartet, bis mit dem Schmelzen der Charge begonnen wird. In der zweiten Phase erfolgt das eigentliche Schmelzen der Charge. In der dritten Phase wird in einer Art Standby-Betrieb abgewartet, bis die hergestellte Charge der Stranggießanlage 18 zugeführt werden kann.

In der ersten Phase hat die Funktion v in der Regel den Wert 0. In der zweiten Phase hat die Funktion v Werte größer als 0, wobei die Werte meist in der Nähe von 1 liegen werden. In der dritten Phase hat die Funktion v ebenfalls Werte größer als 0, wobei die Werte jedoch deutlich kleiner als in der zweiten Phase sind. Durch Variieren der Länge der drei Phasen und des Verlaufs der Funktion v in der zweiten und dritten Phase wird die dem Lichtbogenofen 16 zugeführte elektrische Energie eingestellt. Zusätzlich wird lediglich noch ein einfaches Heizmodell benötigt, in dem die Temperatur der Charge in Abhängigkeit von der zugeführten elektrischen Leistung P16 berechnet wird und auch Wärmeverluste berücksichtigt werden.

Der Kostenanteil K16b, der für den Lichtbogenofen 16 aufgrund der zugeführten elektrischen Energie verursacht wird, kann dadurch ermittelt werden, dass über den Produktionshorizont PH die jeweiligen momentanen Kosten integriert werden. Die momentanen Kosten können zu

$$k5(t)P16(t) \qquad (4)$$

ermittelt werden. Hierbei ist k5 ein zumindest von der Zeit t abhängiger Faktor, der die Kosten für den Bezug elektrischer Energie aus dem Versorgungsnetz 2 widerspiegelt.

In analoger Weise kann gegebenenfalls auch ein Kostenanteil K16c ermittelt werden, der für den Lichtbogenofen 16 aufgrund des zugeführten Wasserstoffs verursacht wird.

Der Kostenanteil K16, der für den Lichtbogenofen 16 insgesamt bestimmt wird, ergibt sich als Summe der beiden Kostenanteile K16a und K16b bzw. der drei Kostenanteile K16a, K16b und K16c.

Unter Umständen kann es möglich sein, in gewissen Grenzen auch die Zeitpunkte zu verschieben, zu denen die Herstellung einer Charge abgeschlossen sein muss. Insbesondere kann die Gießgeschwindigkeit der Stranggießanlage 18 variiert werden. Hier ist jedoch zu berücksichtigen, dass die Gießgeschwindigkeit oftmals nur in geringem Umfang - maximal 10 %, oftmals sogar deutlich weniger als 10 % - und auch dann nicht abrupt, sondern nur langsam geändert werden kann. Es sind also nur kleinere Verschiebungen der Zeitpunkte möglich.

Für den Kostenanteil K15 der Direktreduktionsanlage 15 kann ein ähnlicher Ansatz ergriffen werden, wie er für den Lichtbogenofen 16 erläutert wurde, also einen Anteil K15a, der durch zeitliche Streckung des Betriebs hervorgerufen wird, einen Anteil K15b, der durch die der Direktreduktionsanlage 15 zugeführten elektrischen Energie verursacht wird, und einen Anteil K15c, der durch den der Direktreduktionsanlage 15 zugeführten Wasserstoff verursacht wird. Die Direktreduktionsanlage 15 wird vorzugsweise jedoch möglichst gleichmäßig gefahren. Die Bewertung einer zeitlichen Streckung des Betriebs der Direktreduktionsanlage 15 wird daher erheblich höher sein als die Bewertung einer zeitlichen Streckung des Betriebs des Lichtbogenofens 16. Auch wird der mit vmin korrespondierende Wert höher sein, meist nur knapp unter 1 liegen. Weiterhin wird im Rahmen der Direktreduktion auch Kohlendioxid erzeugt, für das oftmals Zertifikate erforderlich sind, wenn es in die Umwelt abgegeben wird. Auch diese Kosten müssen berücksichtigt werden.

Für den Kostenanteil K17 der Pfannenanlage 17 kann ein ähnlicher Ansatz ergriffen werden, wie er für den Lichtbogenofen 16 erläutert wurde, also einen Anteil K17a, der durch zeitliche Streckung des Betriebs hervorgerufen wird, einen Anteil K17b, der durch die der Pfannenanlage 17 zugeführte elektrische Energie verursacht wird, und einen Anteil K17c, der durch den der Pfannenanlage 17 zugeführten Wasserstoff verursacht wird.

Für die Stranggießanlage 18 fallen nur relativ geringe Energiekosten an. Insbesondere benötigt die Stranggießanlage 18 keinen Wasserstoff und nur in vergleichsweise geringem Umfang elektrische Energie. Es ist alternativ möglich, den entsprechenden Kostenanteil K18 als Konstante anzusetzen oder - analog zur Vorgehensweise bei dem Walzwerk 19 - zusätzlich einen Kostenanteil zu berücksichtigen, der eine (geringfügige) Verringerung der Gießgeschwindigkeit und eine dadurch hervorgerufene geringere Produktivität berücksichtigt.

Der Kostenanteil K1 für die Anlage 1 ergibt sich durch die Summe der Beiträge der einzelnen Komponenten der Anlage 1.

Die Elektrolyseanlage 4 produziert Wasserstoff und gibt ihn ab, der Wasserstoffspeicher 7 nimmt Wasserstoff auf und gibt ihn ab. Es sollte berücksichtigt werden, dass gespeicherter Wasserstoff teilweise entweicht. Die Verluste können, wie bereits erwähnt, bei bis zu 0,5 % der gespeicherten Menge an Wasserstoff pro Tag liegen. Weiterhin wird Energie benötigt, um den Wasserstoff unter Druck in den Wasserstoffspeicher 7 zu drücken. Diese Energie kann beim Entnehmen des Wasserstoffs aus dem Wasserstoffspeicher 7 meist nicht mehr rückgewonnen werden. Die - gemeinsamen - Kosten K47 für den Betrieb der Elektrolyseanlage 4 und des Wasserstoffspeichers 7 können beispielsweise dadurch ermittelt werden, dass über den Produktionshorizont PH die jeweiligen momentanen Kosten integriert werden. Die momentanen Kosten können zu

$$k5(t)P47(t) + k6H'(t) \qquad\qquad (5)$$

ermittelt werden. Hierbei ist k5 der bereits in Verbindung mit Gleichung 4 erläuterte Faktor. P47 ist die aus dem Versorgungsnetz 2 bezogene elektrische Energie. Der Faktor k6 ist im einfachsten Fall eine Konstante. Gegebenenfalls kann auch der Faktor k6 zeitabhängig sein. H' ist die Menge an Wasserstoff, die aktuell gerade verloren geht, also die Ableitung der Menge an gespeichertem Wasserstoff als Funktion der Zeit. Gegebenenfalls kann in den Kosten K47 auch der Verschleiß der Elektrolyseanlage 4 mit berücksichtigt werden.

Wenn die Stromerzeugungseinrichtung 11 den übrigen Teilsystemen 1, 4, 6 und 7 direkt zugeordnet ist, also insbesondere die von der Stromerzeugungseinrichtung 11 erzeugt elektrische Energie den Teilsystemen 1, 4, 6 und 7 ohne Umweg über das Versorgungsnetz 2 zugeführt werden kann, ist die Erzeugung der elektrischen Energie kostenfrei. Übersteigt sie (zeitweise) den elektrischen Energieverbrauch der übrigen Teilsysteme 1, 4, 6 und 7, wird die elektrische Energie in das Versorgungsnetz 2 eingespeist. In diesem Fall können die Kosten K11 für die Stromerzeugungseinrichtung 11 sogar negativ sein.

Oftmals ist der Preis P für die aus dem Versorgungsnetz 2 bezogene elektrische Energie nicht nur von der Zeit t, sondern auch von jeweils bezogenen Leistung abhängig. In diesem Fall sollten die Energieverbräuche der verschiedenen Anlagenteile 15 bis 19, also der Energieverbrauch der Anlage 1 insgesamt, zusammen mit dem Energieverbrauch der Elektrolyseanlage 4 und des Wasserstoffspeichers 7 und auch die Energiebilanz des elektrischen Energiespeichers 6 sowie gegebenenfalls auch die Stromerzeugung durch die Stromerzeugungseinrichtung 11 zusammengeführt werden, bevor unter Verwertung des Faktors k5(t) die Kosten für den Bezug der elektrischen Energie aus dem Versorgungsnetz 2 ermittelt werden.

Die vorliegende Erfindung weist viele Vorteile auf. Insbesondere ist eine umfassende Optimierung des Betriebs des Gesamtsystems, bestehend aus den Teilsystemen 1, 4, 6 und 7 und eventuell zusätzlich auch den Teilsystemen 11 und 12, möglich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1    Anlage

| | |
|---|---|
| 2 | Versorgungsnetz |
| 3 | Umrichter |
| 4 | Elektrolyseanlage |
| 5 | Gleichrichter |
| 6 | Energiespeicher |
| 7 | Wasserstoffspeicher |
| 8 | Steuereinrichtung |
| 9 | Steuerprogramm |
| 10 | Maschinencode |
| 11 | Stromerzeugungseinrichtung |
| 12 | Koppeleinrichtung |
| 13 | Transportnetz |
| 14 | Zusatzspeicher |
| 15 | Direktreduktionsanlage |
| 16 | Lichtbogenofen |
| 17 | Pfannenanlage |
| 18 | Stranggießanlage |
| 19 | Walzwerk |

| | |
|---|---|
| B, B1, B4, B6, B7 | Betriebsweisen |
| D | Daten |
| K | Kostenfunktion |
| P | Preis |
| PH | Prognosehorizont |
| PP | Produktionsplan |
| S1 bis S11 | Schritte |
| Z, Z1, Z4, Z6, Z7 | aktuelle Zustände |
| Z', Z1', Z4', Z6', Z7' | erwartete finale Zustände |

**Patentansprüche**

**1.** Betriebsverfahren für ein Gesamtsystem,

- wobei das Gesamtsystem als Teilsysteme eine Anlage (1) der Stahlindustrie, eine Elektrolyseanlage (4), einen elektrischen Energiespeicher (6) und einen Wasserstoffspeicher (7) umfasst,
- wobei die Anlage (1) der Stahlindustrie, die Elektrolyseanlage (4) und der elektrische Energiespeicher (6) zur Übertragung elektrischer Energie direkt oder indirekt miteinander und mit einem elektrischen Versorgungsnetz (2) verbunden sind,
- wobei die Anlage der Stahlindustrie (1), die Elektrolyseanlage (4) und der Wasserstoffspeicher (7) zum Transfer von Wasserstoff direkt oder indirekt miteinander verbunden sind,
- wobei einer das Gesamtsystem steuernden Steuereinrichtung (8) als aktuelle Zustände (Z1, Z4, Z6, Z7) ein aktueller Anlagenzustand (Z1) der Anlage (1) der Stahlindustrie, ein aktueller Elektrolysenzustand (Z4) der Elektrolyseanlage (4), ein aktueller Energiespeicherzustand (Z6) des Energiespeichers (6) und ein aktueller Wasserstoffspeicherzustand (Z7) des Wasserstoffspeichers (7) bekannt sind,
- wobei der Steuereinrichtung (8) für einen Prognosehorizont (PH) zumindest ein gewünschter Produktionsplan (PP) der Anlage (1) der Stahlindustrie und mindestens ein erwarteter Preis (P) für aus dem Versorgungsnetz (2) bezogene elektrische Energie bekannt sind,
- wobei die Steuereinrichtung (8) für den Prognosehorizont (PH) Betriebsweisen (B1, B4, B6, B7) ansetzt und für das Ende des Prognosehorizonts (PH) erwartete finale Zustände (Z1', Z4', Z6', Z7') ermittelt,
- wobei die Betriebsweisen (B1, B4, B6, B7) eine Anlagenbetriebsweise (B1) für die Anlage (1) der Stahlindustrie, eine Elektrolysenbetriebsweise (B4) für die Elektrolyseanlage (4), eine Energiespeicherbetriebsweise (B6) für den elektrischen Energiespeicher (6) und eine Wasserstoffspeicherbetriebsweise (B7) für den Wasserstoffspeicher (7) umfassen,
- wobei die erwarteten finalen Zustände (Z1', Z4', Z6', Z7') einen unter Verwertung des aktuellen Anlagenzustands (Z1) und der angesetzten Anlagenbetriebsweise (B1) ermittelten finalen Anlagenzustand (Z1'), einen unter Verwertung des aktuellen Elektrolysenzustands (Z4) und der angesetzten Elektrolysenbetriebsweise (B4) ermittelten erwarteten finalen Elektrolysenzustand (Z4'), einen unter Verwertung des aktuellen Energiespeicherzustands (Z6) und der angesetzten Energiespeicherbetriebsweise (B6) ermittelten erwarteten finalen Energiespeicherzustand (Z6') und einen unter Verwertung des aktuellen Wasserstoffspeicherzustands (Z7) und der angesetzten Wasserstoffspeicherbetriebsweise (B7) ermittelten erwarteten finalen Wasserstoffspeicherzustand (Z7') umfassen,

- wobei die Steuereinrichtung (8) für den Prognosehorizont (PH) die angesetzten Betriebsweisen (B1, B4, B6, B7) und hierauf aufbauend die erwarteten finalen Zustände (Z1', Z4', Z6', Z7') variiert, so dass eine Kostenfunktion (K) minimiert wird,

- wobei in die Kostenfunktion (K) die Kosten für den Bezug elektrischer Energie aus dem Versorgungsnetz (2), die Betriebsweisen (B1, B4, B6, B7) der Anlage (1) der Stahlindustrie, der Elektrolyseanlage (4), des elektrischen Energiespeicher (6) und des Wasserstoffspeichers (7), Bewertungen der erwarteten finalen Zustände (Z1', Z4', Z6', Z7') und/oder eine Produktivität der Anlage (1) der Stahlindustrie eingehen und

- wobei die Steuereinrichtung (8) zumindest für den Beginn des Prognosehorizonts (PH) die Teilsysteme (1, 4, 6, 7) gemäß der variierten Betriebsweise (B1, B4, B6, B7) betreibt.

2.  Betriebsverfahren nach Anspruch 1,
    **dadurch gekennzeichnet,**
    **dass** die Anlage (1) der Stahlindustrie mindestens eine Komponente (15, 16, 17) aufweist, die einer Gießeinrichtung (18), mittels derer flüssiger Stahl gegossen wird, technologisch vorgeordnet ist.

3.  Betriebsverfahren nach Anspruch 1 oder 2,
    **dadurch gekennzeichnet,**

    - **dass** das Gesamtsystem als weiteres Teilsystem eine Stromerzeugungseinrichtung (11) aufweist, mittels derer auf regenerative Art und Weise elektrische Energie erzeugbar ist,
    - **dass** die Stromerzeugungseinrichtung (11) zur Übertragung elektrischer Energie direkt oder indirekt mit der Anlage (1) der Stahlindustrie, der Elektrolyseanlage (4) und dem elektrischen Energiespeicher (6) und dem elektrischen Versorgungsnetz (2) verbunden ist,
    - **dass** der Steuereinrichtung (8) für den Prognosehorizont (PH) zusätzlich eine mittels der Stromerzeugungseinrichtung (11) erzeugbare erwartete elektrische Energie bekannt ist und
    - **dass** die Steuereinrichtung (8) beim Variieren der Betriebsweisen (B1, B4, B6, B7) die mittels der Stromerzeugungseinrichtung (11) erzeugbare erwartete elektrische Energie berücksichtigt.

4.  Betriebsverfahren nach Anspruch 1, 2 oder 3,
    **dadurch gekennzeichnet,**

    - **dass** das Gesamtsystem als weiteres Teilsystem eine Koppeleinrichtung (12) aufweist, die einerseits zum Transfer von Wasserstoff direkt oder indirekt mit der Anlage (1) der Stahlindustrie und/oder der Elektrolyseanlage (4) und/oder dem Wasserstoffspeicher (7) verbunden ist und andererseits mit einem externen Transportnetz (13) für Wasserstoff oder einem lösbar mit der Koppeleinrichtung (12) verbundenen Zusatzspeicher (14) für Wasserstoff verbunden ist,
    - **dass** die Steuereinrichtung (8) beim Variieren der Betriebsweisen (B1, B4, B6, B7) den über die Koppeleinrichtung (12) transferierten Wasserstoff berücksichtigt und
    - **dass** in die Kostenfunktion (K) die Kosten für den über die Koppeleinrichtung (12) transferierten Wasserstoff eingehen.

5.  Betriebsverfahren nach einem der obigen Ansprüche,
    **dadurch gekennzeichnet,**
    **dass** in die Kostenfunktion (K) Verluste an im Wasserstoffspeicher (7) befindlichem Wasserstoff eingehen.

6.  Betriebsverfahren nach einem der obigen Ansprüche,
    **dadurch gekennzeichnet,**
    **dass** die Steuereinrichtung (8) beim Variieren der Betriebsweisen (B1, B4, B6, B7) einen minimalen und einen maximalen Ladezustand des elektrischen Energiespeichers (6) und/oder einen mittleren Ladezustand des elektrischen Energiespeichers (6) und/oder einen minimalen und einen maximalen Füllstand des Wasserstoffspeichers (7) und/oder einen mittleren Füllstand des Wasserstoffspeichers (7) berücksichtigt.

7.  Steuerprogramm für eine Steuereinrichtung für ein Gesamtsystem,

- wobei das Gesamtsystem als Teilsysteme eine Anlage (1) der Stahlindustrie, eine Elektrolyseanlage (4), einen Wasserstoffspeicher (7) und einen elektrischen Energiespeicher (6) umfasst,
- wobei die Anlage (1) der Stahlindustrie, die Elektrolyseanlage (4) und der elektrische Energiespeicher (6) zur Übertragung elektrischer Energie direkt oder indirekt miteinander und mit einem elektrischen Versorgungsnetz (2) verbunden sind,
- wobei die Anlage der Stahlindustrie (1), die Elektrolyseanlage (4) und der Wasserstoffspeicher (7) zum Transfer von Wasserstoff direkt oder indirekt miteinander verbunden sind,
- wobei das Steuerprogramm Maschinencode (10) umfasst, der von der Steuereinrichtung (8) abarbeitbar ist,
- wobei die Abarbeitung des Maschinencodes (10) durch die Steuereinrichtung (8) bewirkt, dass die Steuereinrichtung (8) das Gesamtsystem gemäß einem Betriebsverfahren nach einem der obigen Ansprüche steuert.

8. Steuereinrichtung für ein Gesamtsystem,

- wobei das Gesamtsystem als Teilsysteme eine Anlage (1) der Stahlindustrie, eine Elektrolyseanlage (4), einen Wasserstoffspeicher (7) und einen elektrischen Energiespeicher (6) umfasst,
- wobei die Anlage (1) der Stahlindustrie, die Elektrolyseanlage (4) und der elektrische Energiespeicher (6) zur Übertragung elektrischer Energie direkt oder indirekt miteinander und mit einem elektrischen Versorgungsnetz (2) verbunden sind,
- wobei die Anlage der Stahlindustrie (1), die Elektrolyseanlage (4) und der Wasserstoffspeicher (7) zum Transfer von Wasserstoff direkt oder indirekt miteinander verbunden sind,
- wobei die Steuereinrichtung mit einem Steuerprogramm (9) nach Anspruch 7 programmiert ist, so dass die Steuereinrichtung bei Abarbeitung des Maschinencodes (10) des Steuerprogramms (9) das Gesamtsystem gemäß einem Betriebsverfahren nach einem der Ansprüche 1 bis 6 steuert.

9. Gesamtsystem,

- wobei das Gesamtsystem als Teilsysteme eine Anlage (1) der Stahlindustrie, eine Elektrolyseanlage (4), einen Wasserstoffspeicher (7) und einen elektrischen Energiespeicher (6) umfasst,
- wobei die Anlage (1) der Stahlindustrie, die Elektrolyseanlage (4) und der elektrische Energiespeicher (6) zur Übertragung elektrischer Energie direkt oder indirekt miteinander und mit einem elektrischen Versorgungsnetz (2) verbunden sind,
- wobei die Anlage der Stahlindustrie (1), die Elektrolyseanlage (4) und der Wasserstoffspeicher (7) zum Transfer von Wasserstoff direkt oder indirekt miteinander verbunden sind,
- wobei das Gesamtsystem eine Steuereinrichtung (8) nach Anspruch 8 umfasst, die bei Abarbeitung des Maschinencodes (10) eines Steuerprogramms (9) von Anspruch 7 das Gesamtsystem gemäß einem Betriebsverfahren nach einem der Ansprüche 1 bis 6 steuert.

FIG 1

## FIG 2

$$Z = (Z1, Z4, Z6, Z7, ...)$$ — S1

$$PP(t); t \in [0; PH]$$ — S2

$$D(P(t)); t \in [0; PH]$$ — S3

$$B = (B1, B4, B6, B7, ...)$$ — S4

$$Z' = (Z1', Z4', Z6', Z7', ...)$$ — S5

$$K = K(B, Z')$$ — S6

$$B:K \longrightarrow min$$ — S7

$$B1 \longrightarrow 1; B4 \longrightarrow 4; B6 \longrightarrow 6; B7 \longrightarrow 7, ...$$ — S8

S9

−

+

S10

−

+

— S11

FIG 3

EP 4 401 264 A1

FIG 4

$Z = (Z1, Z4, Z6, Z7, ...)$ — S1

$PP(t); t \in [0; PH]$ — S2

$D(P(t)); t \in [0; PH]$ — S3

— S21

$B = (B1, B4, B6, B7, ...)$ — S4

$Z' = (Z1', Z4', Z6', Z7', ...)$ — S5

$K = K(B, Z')$ — S6

$B:K \rightarrow min$ — S7

$B1 \rightarrow 1; B4 \rightarrow 4; B6 \rightarrow 6; B7 \rightarrow 7, ...$ — S8

S9

−

+

S10

−

+

S11

FIG 5

EP 4 401 264 A1

Europäisches
Patentamt

European
Patent Office

Office européen
des brevets

# EUROPÄISCHER RECHERCHENBERICHT

Nummer der Anmeldung

EP 23 15 1165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 7 444 189 B1 (MARHOEFER JOHN JOSEPH [US]) 28. Oktober 2008 (2008-10-28) * Spalte 4, Zeile 39 – Spalte 13, Zeile 39; Abbildungen 1,2,4 * | 1-9 | INV. H02J3/28 H02J3/38 |
| Y | DE 10 2012 113049 A1 (EVONIK INDUSTRIES AG [DE]) 26. Juni 2014 (2014-06-26) * Absätze [0050], [0068], [0080] – [0110]; Abbildungen 1,2 * | 1-9 | |
| A | US 2020/106294 A1 (WENZEL MICHAEL J [US] ET AL) 2. April 2020 (2020-04-02) * Absätze [0004] – [0009], [0068] – [0094]; Abbildungen 1-5 * | 1-9 | |
| A | US 2022/302708 A1 (KUMAZAWA TOSHIMITSU [JP] ET AL) 22. September 2022 (2022-09-22) * Absätze [0025] – [0036], [0044] – [0092]; Abbildungen 1,4-9 * | 1-9 | |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 28. Juni 2023 | Bergler, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.............................................................

& : Mitglied der gleichen Patentfamilie, übereinstimmendes
Dokument

EPO FORM 1503 03.82 (P04C03)

# EP 4 401 264 A1

## ANHANG ZUM EUROPÄISCHEN RECHERCHENBERICHT
## ÜBER DIE EUROPÄISCHE PATENTANMELDUNG NR.

EP 23 15 1165

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2023

| Im Recherchenbericht angeführtes Patentdokument | Datum der Veröffentlichung | Mitglied(er) der Patentfamilie | Datum der Veröffentlichung |
|---|---|---|---|
| US 7444189 B1 | 28-10-2008 | KEINE | |
| DE 102012113049 A1 | 26-06-2014 | DE 102012113049 A1 | 26-06-2014 |
| | | WO 2014095343 A2 | 26-06-2014 |
| US 2020106294 A1 | 02-04-2020 | KEINE | |
| US 2022302708 A1 | 22-09-2022 | AU 2021229178 A1 | 06-10-2022 |
| | | JP 2022143510 A | 03-10-2022 |
| | | US 2022302708 A1 | 22-09-2022 |

EPO FORM P0461

Für nähere Einzelheiten zu diesem Anhang : siehe Amtsblatt des Europäischen Patentamts, Nr.12/82

26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20190136300 A
- US 10354297 B2
- TW 201235124 A
- US 8288888 B2

**In der Beschreibung aufgeführte Nicht-Patentliteratur**

- Grüne Energieversorgung der Stahlindustrie. *Stahl und Eisen,* August 2022, 22-24
- **FLETCHER, R.** Practical Methods on Optimization. John Wiley Inc, 1987
- **HINTERMÜLLER, M. ; STADLER, G.** A semi-smooth Newton methods for linear-quadratic control problems. *Zeitschrift für angewandte Mathematik und Mechanik (ZAMM),* 2003, vol. 83-4, 219-237
- **ITO, K. ; KUNISCH, K.** Semi-smooth Newton methods for state-constrained optimal control problems. *Systems and Control Letters,* 2003, vol. 50, 221-228